(19) Europäisches Patentamt / European Patent Office / Office européen des brevets

(11) **EP 4 617 390 A1**

(12) **EUROPEAN PATENT APPLICATION**
published in accordance with Art. 153(4) EPC

(43) Date of publication:
**17.09.2025 Bulletin 2025/38**

(21) Application number: **22965127.8**

(22) Date of filing: **09.11.2022**

(51) International Patent Classification (IPC):
*C22C 14/00* (2006.01)    *C22F 1/00* (2006.01)
*C22F 1/18* (2006.01)

(52) Cooperative Patent Classification (CPC):
**C22C 14/00; C22F 1/18;** C22F 1/00

(86) International application number:
**PCT/JP2022/041712**

(87) International publication number:
**WO 2024/100802 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NIPPON STEEL CORPORATION**
**Chiyoda-ku**
**Tokyo 100-8071 (JP)**

(72) Inventor: **KAMIO Hiroshi**
**Tokyo 100-8071 (JP)**

(74) Representative: **Vossius & Partner**
**Patentanwälte Rechtsanwälte mbB**
**Siebertstrasse 3**
**81675 München (DE)**

(54) **TITANIUM MATERIAL, CHEMICAL DEVICE COMPONENT, AND CHEMICAL DEVICE**

(57) In an embodiment of the present invention, a titanium material includes: in terms of mass%, 0.100 to 0.300% of C; and a compound particle including titanium and carbon and having an average diameter of 400 nm or shorter. In an embodiment of the present invention, the titanium material preferably has an A value of 0.10 or more, the A value being an index of a proportion of TiC and $Ti_2C$ in the compound particle including titanium and carbon. In an embodiment of the present invention, the titanium material preferably includes $Ti_3C_2$. In another embodiment of the present invention, a chemical device component includes the titanium material according to the embodiment. In another embodiment of the present invention, a chemical device includes the chemical device component according to the embodiment.

FIG. 1

200 μm

EP 4 617 390 A1

**Description**

TECHNICAL FIELD

The present invention relates to a titanium material, a chemical device component, and a chemical device.

BACKGROUND ART

Industrial pure titanium exhibits excellent corrosion resistance even in seawater, which corrodes general-purpose stainless steel such as SUS304. Due to the high corrosion resistance, industrial pure titanium is used in seawater desalination plants and the like.

On the other hand, industrial pure titanium is sometimes used in a higher corrosive environment than seawater, such as hydrochloric acid, as a material for a chemical device component. Under such an environment, industrial pure titanium may also be significantly corroded.

On the assumption of use under such a severe corrosive environment, anticorrosive titanium alloys having better corrosion resistance than industrial pure titanium under a highly corrosive environment have been developed.

Patent Document 1 discloses an alloy to which a platinum group element such as Pd is added. Patent Document 2 and Non-Patent Document 1 disclose an alloy having a precipitated intermetallic compound in addition to a platinum group element added thereto.

However, these titanium alloys use rare elements such as Pd, increasing the material cost. Therefore, these titanium alloys have an economic problem in that the corrosion resistance of titanium should be improved without using an expensive rare element. Therefore, some proposals have been made on titanium alloys that do not require the use of rare elements and utilize general-purpose elements.

Patent Document 3 discloses an invention to improve the corrosion resistance and strength of Ti by adding C. Non-Patent Document 2 discloses a technique to manufacture a steel that includes a precipitated carbide having an average particle diameter of several hundred nm or shorter by adding a trace amount of an element that easily forms a carbide, such as Ti, Cr, V, or Nb, to steel. Non-Patent Document 3 discloses a technique to precipitate a carbide (TiC) having an average particle diameter of several hundred nm or shorter at the surface layer of industrial pure titanium.

Citation List

Patent Document

Patent Document 1: PCT International Publication No. WO 2007/077645
Patent Document 2: Japanese Unexamined Patent Application, First Publication No. 2012-012636
Patent Document 3: Published Japanese Translation No. 2009-509038 of the PCT International Publication

Non-Patent Document

Non-Patent Document 1: "Tetsu-to-Hagane vol.80, No.4(1994), P353-358
Non-Patent Document 2: "Journal of the Japan Institute of Metals and Materials" vol.81, No.10(2017), P447-457
Non-Patent Document 3: "Tetsu-to-Hagane vol.104, No.5(2018), P264-273

SUMMARY OF INVENTION

Technical Problem

However, as shown in FIG. 2A (FIG. 2 of Patent Document 3), the titanium material disclosed in Patent Document 3 has a precipitated compound particle including titanium and carbon and having an average diameter of several $\mu$m or longer. When the diameter of the compound particle including titanium and carbon is as large as several $\mu$m or longer, the compound particle including titanium and carbon itself or the interface between the compound particle including titanium and carbon and the parent phase tends to be a starting point of cracking. Therefore, the titanium material disclosed in Patent Document 3 has problems in ductility (total elongation), workability, and balance in strength and ductility. The titanium material disclosed in Patent Document 3 has ductility of less than 30%. On the other hand, general-purpose plates used for heat exchangers and plant members and made of industrial titanium are required to have a total elongation of 30% or more. In addition, a general-purpose plate made of industrial titanium is required to have workability such as bending in order to be formed into a component shape. Furthermore, these applications require an excellent balance in strength and ductility to pursue weight reduction and miniaturization. It is required that the product of tensile strength and total elongation be 15000 MPa·% or more on the premise of a total elongation of 30% or more. The titanium material of Patent Document 3 does not have sufficient ductility (total elongation), and raises problems when actually applied to a heat exchanger or a chemical device member.

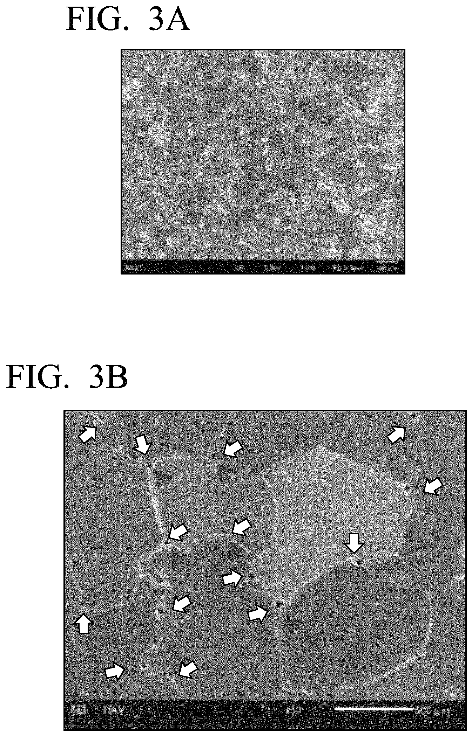

When the titanium material is subjected to a heat treatment such that a compound particle including titanium and carbon and having a large average diameter, which easily becomes a starting point of cracking, is not formed, the problems of ductility, workability, and balance in strength and ductility may be solved. However, in this case, as shown in FIG. 3B, there is a problem in that local corrosion occurs in the titanium material. The occurrence of local corrosion not only significantly degrades corrosion resistance and increases corrosion rate, but also induces stress corrosion cracking starting from the generated local corrosion. Therefore, a titanium material that easily causes local corrosion may have poor stress corrosion cracking resistance. In addition, a titanium material having insufficient corrosion resistance may cause a problem of erosion due to overall corrosion in addition to local corrosion and stress corrosion cracking.

In order to solve such a problem, not only does the formed compound particle including titanium and carbon have an average diameter as small as several hundred nm or shorter, but also the formed compound particle including titanium and carbon is required to exhibit a sufficient corrosion resistance-improving effect. However, there has been no technique satisfying these in the conventional titanium material.

For example, Non-Patent Document 2 discloses a technique to manufacture a steel that includes a precipitated carbide having an average particle diameter of several hundred nm or shorter by adding a trace amount of an element that easily forms a carbide, such as Ti, Cr, V, or Nb, to steel. However, since a titanium material includes Ti atoms, which easily form a carbide, throughout, it is not possible to manufacture a titanium material including a precipitated carbide having an average particle diameter of several hundred nm or shorter by the same method.

As described above, Non-Patent Document 3 discloses a technique to form a compound particle including titanium and carbon and having an average diameter of several hundred nm or shorter at the surface layer of industrial pure titanium. However, the compound particle including titanium and carbon is formed only at the surface layer, and it is not possible to form a compound particle including titanium and carbon and having an average diameter of several hundred nm or shorter also in the bulk metal titanium by the same method.

An object of the present invention is to provide a titanium material, a chemical device component, and a chemical device that have improved high ductility, workability, balance in strength and ductility, corrosion resistance, local corrosion resistance, and stress corrosion cracking resistance.

Solution to Problem

The gist of the present invention is as follows.

(1) In an embodiment of the present invention, a titanium material includes: in terms of mass%, 0.100 to 0.300% of C; 0.000 to 0.030% of N; 0.000 to 0.100% of Si; 0.000 to 0.300% of Fe; 0.0300% or less of S; 0.0300% or less of P; 0.000 to 0.015% of H; 0.000 to 0.250% of O; 0.000 to 0.300% of B; 0.000 to 0.500% of Al; 0.000 to 0.200% of Ca; 0.000 to 0.100% of Sc; 0.000 to 0.500% of V; 0.000 to 0.600% of Co; 0.000 to 0.400% of Ni; 0.000 to 0.300% of Zn; 0.000 to 0.200% of Ga; 0.000 to 0.200% of Ge; 0.000 to 0.300% of Y; 0.000 to 0.150% of Nb; 0.000 to 0.250% of Mo; 0.000 to 0.100% of Ag; 0.000 to 0.200% of Cd; 0.000 to 0.100% of In; 0.000 to 0.100% of Sb; 0.000 to 0.180% of Bi; 0.000 to 0.300% of Hf; 0.000 to 0.300% of Ta; 0.000 to 0.600% of W; 0.000 to 0.300% of Re; 0.000 to 0.100% of Au; 0.000 to 0.200% in total of one or more of Pt, Pd, Ru, Ir, Rh, and Os; 0.00 to 0.20% in total of one or more of Mn, Cu, Cr, Sn, and Zr; and a balance including Ti and impurities, wherein the titanium material comprises a compound particle including titanium and carbon and having an average diameter of 400 nm or shorter.

(2) The titanium material according to (1) preferably includes: in terms of mass%, 0.0001 to 0.0300% of S; and 0.0001 to 0.0300% of P.

(3) The titanium material according to (1) or (2) preferably has an A value of 0.10 or more, the A value calculated by substituting an X-ray diffraction analysis result of the compound particle including titanium and carbon into the following formulae,

[Mathematical Formula 1]

$$A = I_{Ti2C}/(1.3I_{TiC} + I_{Ti2C})$$

$$I_{TiC} = \left\{ \sum \left( I_{TiC(hkl)}/R_{TiC(hkl)} \right) \right\}/n$$

$$I_{Ti2C} = \left\{ \sum \left( I_{Ti2C(hkl)}/R_{Ti2C(hkl)} \right) \right\}/n$$

herein, $I_{TiC}$ is a representative value of an integrated intensity of TiC, which is a kind of the compound particle including titanium and carbon, $I_{Ti2C}$ is a representative value of an integrated intensity of $Ti_2C$, which is a kind of the compound particle including titanium and carbon, $I_{TiC(hkl)}$ is a measured integrated intensity for each Miller index of the TiC, $I_{Ti2C(hkl)}$ is a measured integrated intensity for each Miller index of the $Ti_2C$, $R_{TiC(hkl)}$ is a coefficient corresponding to each Miller index of the TiC, $R_{Ti2C(hkl)}$ is a coefficient corresponding to each Miller index of the $Ti_2C$, and n is 5, and $R_{TiC(hkl)}$ and $R_{Ti2C(hkl)}$ correspond to each Miller index as shown in the following table.

[Table 1]

| Miller index | $R_{TiC\ (hkl)}$ | $R_{Ti2C\ (hkl)}$ |
|---|---|---|
| (111) | 0.94 | |
| (200) | 1.00 | |
| (220) | 0.46 | |
| (311) | 0.22 | |
| (222) | 0.14 | |
| (111) | | 0.12 |
| (222) | | 1.00 |
| (400) | | 0.70 |
| (440) | | 0.33 |
| (620) | | 0.22 |

(4) The titanium material according to any one of (1) to (3) preferably includes $Ti_3C_2$.

(5) In another embodiment of the present invention, a chemical device component includes the titanium material according to any one of (1) to (4).

(6) In another embodiment of the present invention, a chemical device includes the chemical device component according to (5).

Advantageous Effects of Invention

According to the present invention, it is possible to provide a titanium material that has excellent ductility, workability, balance in strength and ductility, corrosion resistance, local corrosion resistance, and stress corrosion cracking resistance.

BRIEF DESCRIPTION OF DRAWINGS

[FIG. 1] An example of a photograph of the metallographic structure of a titanium material manufactured by the manufacturing method according to the present embodiment.

[FIG. 2A] An example of a metal photograph of a titanium material manufactured by a conventional manufacturing method. The black contrast portion is TiC. FIG. 2A is a citation from Patent Document 3.

[FIG. 2B] An example of a metal photograph of a titanium material manufactured by a conventional manufacturing method. The black contrast portion is TiC.

[FIG. 3A] An example of a surface SEM image of a titanium material after a corrosion resistance test in an aqueous hydrochloric acid solution, which is manufactured by the manufacturing method according to the present embodiment.

[FIG. 3B] An example of a surface SEM image of a titanium material after a corrosion resistance test in an aqueous hydrochloric acid solution, which is manufactured by a conventional manufacturing method. The arrows indicate pitting corrosion.

[FIG. 4] A schematic view illustrating the annealing method for a titanium material according to the present embodiment.

[FIG. 5] A figure showing the relationship between the average diameter of a compound particle including titanium and carbon and the balance of strength and ductility.

[FIG. 6] A figure showing the relationship between the average diameter of a compound particle including titanium and carbon and the total elongation.

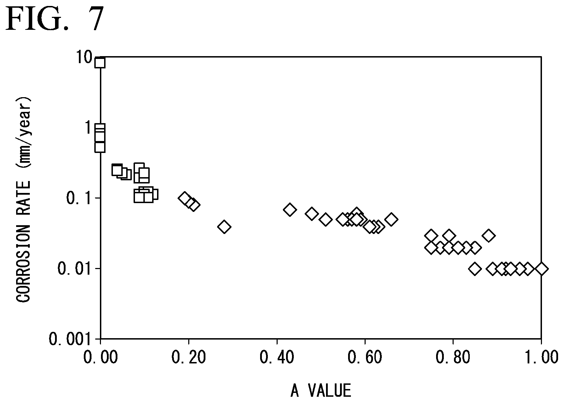

[FIG. 7] A figure showing the relationship between the A value (index of the proportion of $Ti_2C$ in the formed compound particle including titanium and carbon) and the corrosion resistance.

DESCRIPTION OF EMBODIMENTS

(1. Outline of Titanium Material of Present Embodiment)

In order to solve the above problems, the present inventors have conducted studies on the relationship between the formation size of a compound particle including titanium and carbon and the ductility, workability, balance in strength and ductility, corrosion resistance, local corrosion resistance, and stress corrosion cracking resistance of a titanium material.

As a result, the present inventors have found that a titanium material has effectively improved ductility, workability, balance in strength and ductility, corrosion resistance, local corrosion resistance, and stress corrosion cracking resistance, mainly by

(1) the C content being 0.10 to 0.30%, and
(2) the compound particle including titanium and carbon formed in the titanium material having an average diameter of 400 nm or shorter.

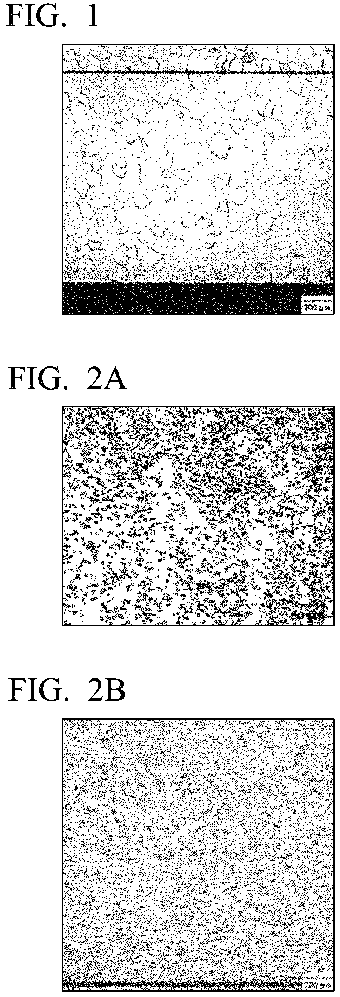

FIG. 1 is an example of a photograph of the metallographic structure of a titanium material manufactured by the manufacturing method according to the present embodiment. FIGS. 2A and 2B are each an example of a photograph of the metallographic structure of a titanium material manufactured by a conventional manufacturing method. FIG. 2A is a citation from Patent Document 3. In these photographs, the black contrast portion is TiC. FIG. 3A is an example of a surface SEM image of the titanium material according to the present embodiment after a corrosion resistance test in an aqueous hydrochloric acid solution. FIG. 3B is an example of a surface SEM image of a conventional titanium material after a corrosion resistance test in an aqueous hydrochloric acid solution. Local corrosion occurs on the surface of the conventional titanium material. In FIG. 3B, local corrosion is generated at the portions indicated by an arrow. As described above, the titanium material according to the present embodiment has greatly improved corrosion resistance and local corrosion resistance. The present inventors have confirmed that the titanium material according to the present embodiment also has other excellent properties.

Furthermore, the present inventors have found that the index of the proportion of TiC and $Ti_2C$ in the compound particle including titanium and carbon (the A value described later) is preferably 0.10 or more for further improving various characteristics. In addition, the present inventors have found that $Ti_3C_2$ is further preferably included in the compound particle including titanium and carbon.

In the titanium material according to the present embodiment, the compound particle including titanium and carbon plays an important role in realizing excellent ductility, workability, balance in strength and ductility, corrosion resistance, local corrosion resistance, and stress corrosion cracking resistance. In the titanium material according to the present embodiment, the type of the compound particle is not particularly limited as long as the size of the compound particle including titanium and carbon is within the above-described range, but $Ti_2C$ and $Ti_3C_2$ are more preferable for the above-described reasons.

Furthermore, the present inventors have also found that when a C-containing titanium alloy is subjected to cold working with a working degree of 10% or more and then subjected to a specific heat treatment, the compound particle including titanium and carbon formed in the titanium material can have an average diameter of 400 nm or shorter.

The heat treatment applied to an example of the manufacturing method of the titanium material according to the present embodiment will be described. The titanium material according to the present embodiment is obtained, for example, by subjecting a titanium material semi-finished product containing C to cold working at a working degree of 10% or more, followed by heat treatment. In the heat treatment, the stay time and the holding time at a relatively low temperature of 200°C to 590°C are secured longer than those in a conventional heat treatment.

In the above temperature range, titanium and elements contained in a titanium material have an insufficient diffusion rate, and therefore, recrystallization and phase transformation do not sufficiently proceed. Therefore, the above-described temperature range has not been utilized in the prior art. However, the present inventors have found that when a titanium material semi-finished product including a predetermined amount of C is subjected to cold working, and then subjected to a heat treatment in the above-described temperature range or a temperature increase before a heat treatment at a specific average temperature rising rate, a small compound particle including titanium and carbon is formed, and further, the compound particle including titanium and carbon can be $Ti_2C$ or $Ti_3C_2$, which is a metastable phase.

The compound particle including titanium and carbon is divided into several kinds, and each of $Ti_2C$ and $Ti_3C_2$ is a metastable phase that is unstable in thermodynamic equilibrium and in dynamics as compared with TiC. In order that the compound particle including titanium and carbon has an average diameter of 400 nm or shorter, the stay time and the holding time at 200°C to 590°C are secured longer than conventional ones. In this thermal history, $Ti_2C$ or $Ti_3C_2$ may be formed. At this time, the formed $Ti_2C$ and $Ti_3C_2$ have a lower particle growth rate than TiC, and thus can have an average particle diameter of 400 nm or shorter. Although some of the particles are transformed into TiC through the subsequent temperature increase or holding at 600°C to 850°C, the average particle diameter remains 400 nm or shorter even after transformation into TiC because $Ti_2C$ and $Ti_3C_2$ have a small average particle diameter before transformation.

Further, the present inventors have found that when a titanium material having the above-described features is used as a material for a chemical device component and a chemical device, the titanium material exhibits excellent contact resistance, hydrogen overvoltage, and oxygen overvoltage.

(2. Specific Embodiment of Titanium Material of Present Embodiment)

Next, a specific embodiment of the titanium material according to the present embodiment will be described. The features of the titanium material according to the present embodiment are mainly the chemical composition of the titanium material and the state of the compound particle including titanium and carbon included in the titanium material. Therefore, the shape and the like of the titanium material are not particularly limited. When the titanium material is a titanium plate, a titanium foil, a titanium strip, or a titanium coil, the plate thickness thereof is, for example, preferably 0.1 to 6.0 mm, but another plate thickness can be appropriately adopted. The titanium material may have other shapes such as a rod shape. When the titanium material has a bar line shape, the diameter thereof is, for example, preferably 1 to 10 mm, but another diameter can be appropriately adopted. When the titanium material has a tubular shape, the diameter thereof is, for example, preferably 10 to 300 mm, but another diameter can be appropriately adopted. A titanium material in which the chemical composition of the titanium material and the state of the compound particle including titanium and carbon are within the range as described below is regarded as the titanium material according to the present embodiment. Since the titanium material according to the present embodiment has improved corrosion resistance, an oxide or a hydrate functioning as a protective layer is easily formed on the surface layer of the titanium material. In addition, the titanium material according to the present embodiment can react with sulfuric acid or the like contained in the environment during use under a corrosive environment to form a sulfide or the like on the surface thereof. Even when such a protective layer or a sulfide is formed on the surface layer, the titanium material is included in the present embodiment.

(2.1. Chemical Composition of Titanium Material of Present Embodiment)

First, the chemical composition of the titanium material according to the present embodiment will be described. In the following description on the chemical composition, the "mass%" is simply abbreviated as "%".

<C: 0.100 to 0.300%>

In the present embodiment, C plays an important role in improving ductility, workability, balance in strength and ductility, corrosion resistance, local corrosion resistance, and stress corrosion cracking resistance. As the C content increases, corrosion resistance, local corrosion resistance, and stress corrosion cracking resistance are improved. The effect of improving corrosion resistance by containing C is remarkably exhibited when the C content is 0.100% or more. The C content is preferably 0.280% or less, more preferably 0.250% or less.

On the other hand, as described later, a part of C contained in the titanium material according to the present embodiment is present as a compound particle including titanium and carbon. When a compound particle including titanium and carbon is formed and the C content is excessively large, an excessively large amount of a compound particle including titanium and carbon is formed, and adversely affects ductility, workability, and balance in strength and ductility. Therefore, the C content is 0.300% or less. The C content is preferably 0.120% or more, more preferably 0.150% or more.

<N: 0.000 to 0.030%>

N has a strength-improving-action. However, the titanium material according to the present embodiment secures strength by other means. Therefore, the lower limit of the N content may be 0.000%. The lower limit of the N content may be 0.005%, more preferably 0.010%.

On the other hand, as the N content increases, ductility and toughness deteriorate. N is an interstitial solid solution element as with C, which plays an important role in improving corrosion resistance in the titanium material according to the present embodiment. Therefore, an increase in the N content may cause a decrease in the solid solution content of C or may adversely affect the formation behavior of the compound particle including titanium and carbon. Therefore, the N content is 0.030% or less. The N content is preferably 0.025 or less, more preferably 0.020% or less.

<Si: 0.000 to 0.100%>

Si is a relatively inexpensive element and is an element effective for improving heat resistance (oxidation resistance and high-temperature strength). However, the titanium material according to the present embodiment secures strength by other means. Therefore, the lower limit of the Si content may be 0.000%. The lower limit of the Si content is more preferably 0.003%, and the upper limit of the Si content is more preferably 0.080%.

On the other hand, when the Si content is excessively large, the precipitation of a Si compound may be promoted. In addition, when Si is mixed into the compound particle including titanium and carbon, the formation behavior of the compound particle may be adversely affected. In particular, the amount of the compound particle including titanium and carbon may be excessively large. In this case, the ductility and toughness of the titanium material are deteriorated. Therefore, the Si content is 0.100% or less. The upper limit of the Si content is more preferably 0.080%, 0.060%, or 0.040%.

<Fe: 0.000 to 0.300%>

Fe has a strength-improving-action. However, the titanium material according to the present embodiment secures strength by other means. Therefore, the lower limit of the Fe content may be 0.000%. The lower limit of the Fe content is preferably 0.020%, and more preferably 0.030%.

On the other hand, as the Fe content increases, the ductility and toughness of the titanium material deteriorate. In addition, when a large amount of Fe is distributed in the vicinity of the compound particle including titanium and carbon, the formation behavior of the compound particle may be adversely affected. In particular, the amount of the compound particle including titanium and carbon may be excessively large. Therefore, the Fe content is 0.300% or less. The upper limit of the Fe content is preferably 0.250%, more preferably 0.200%. The Fe content may be less than 0.100%, or may be 0.080% or less.

<S: 0.0000 to 0.0300%>

In the titanium material according to the present embodiment, S is not essential. Therefore, the lower limit of the S content may be 0.0000%. However, S has a strength-improving effect. S is an element effective for improving interface contact resistance. For example, when the titanium material according to the present embodiment is included in a chemical device component, a chemical device, or the like and used in an aqueous solution for a long time, and a passive film grows, S included in the titanium material has a significant effect on suppressing an increase in interface contact resistance. By suppressing an increase in the interface contact resistance of the titanium material used as a constituting material of a chemical device component or a chemical device, the chemical device component, the chemical device, and the like can operate with a small energy loss. In order to obtain this effect, the lower limit of the S content is preferably 0.0001%, more preferably 0.0005%, and still more preferably 0.0010%.

On the other hand, as the S content increases, ductility and toughness deteriorate. In addition, when S is mixed into the compound particle including titanium and carbon, the formation behavior of the compound particle may be adversely affected. In particular, the amount of the compound particle including titanium and carbon may be excessively large. Therefore, the S content is 0.0300% or less. The upper limit of the S content is preferably 0.0250%, more preferably 0.0200%.

<P :0.0000 to 0.0300%>

In the titanium material according to the present embodiment, P is not essential. Therefore, the lower limit of the P content may be 0.0000%. However, P is an element effective for improving strength. In addition, P is an element effective for improving interface contact resistance. For example, when the titanium material according to the present embodiment is included in a chemical device component, a chemical device, or the like and used in an aqueous solution for a long time, and a passive film grows, P included in the titanium material has a significant effect on suppressing an increase in interface contact resistance. By suppressing an increase in the interface contact resistance of the titanium material used as a constituting material of a chemical device component, a chemical device, and the like, the chemical device component, the chemical device, and the like can operate with a small energy loss. Therefore, the lower limit of the P content is preferably 0.0001 %, more preferably 0.0005%, and still more preferably 0.0010%.

On the other hand, as the P content increases, ductility and toughness deteriorate. In addition, when P is mixed into the compound particle including titanium and carbon, the formation behavior of the compound particle may be adversely affected. In particular, the amount of the compound particle including titanium and carbon may be excessively large. Therefore, the P content is 0.0300% or less. The upper limit of the P content is preferably 0.0250%, more preferably 0.0200%.

<H: 0.000 to 0.015% or less>

H is an element that forms a titanium hydride and deteriorates the ductility and toughness of the material. Therefore, the H content is preferably small. Thus, the H content may be 0.000%. The H content is limited to 0.015% or less. The upper limit of the H content is preferably 0.013%, or 0.010%. When such a titanium material with a small amount of H is obtained, commercially available sponge titanium may be used as a melting raw material. When a titanium material with a further smaller amount of H is obtained, high purity titanium may be used as a melting raw material.

Although there are various grades of commercially available sponge titanium, too much high purity sponge titanium results in an increase in cost. In the titanium material according to the present embodiment, the H content is preferably 0.001 % or more from the viewpoint of cost. The lower limit of the H content is more preferably 0.005%.

<O: 0.000 to 0.250% or less >

O is an element effective for improving strength, but is not essential in the titanium material according to the present embodiment. On the other hand, as the O content increases, the ductility and toughness of the titanium material deteriorate. O is an interstitial solid solution element as with C, which plays an important role in improving corrosion resistance in the titanium material according to the present embodiment. Therefore, an increase in the O content may cause a decrease in the solid solution content of C or may adversely affect the formation behavior of the compound particle including titanium and carbon. In particular, the amount of the compound particle including titanium and carbon may be excessively large. Thus, the O content may be 0.000%. The O content is 0.250% or less. The upper limit of the O content is preferably 0.200%, more preferably 0.180%.

When a titanium alloy having a small O content is obtained, high purity sponge titanium may be used among commercially available sponge titanium. When a titanium material with a further smaller amount of O is obtained, high purity titanium may be used as a melting raw material.

However, too much high purity sponge titanium results in an increase in cost. In the titanium material according to the present embodiment, the lower limit of the O content is preferably 0.020%, and more preferably 0.030%.

<B: 0.000 to 0.300%>

B has a strength improving-action. However, the titanium material according to the present embodiment secures strength by other means. Therefore, the lower limit of the B content may be 0.000%. The lower limit of the B content may be 0.005%, and more preferably 0.010%. On the other hand, as the B content increases, the ductility and toughness of the titanium material deteriorate. B is an interstitial solid solution element as with C, which plays an important role in improving corrosion resistance in the titanium material according to the present embodiment. Therefore, an increase in the B content may cause a decrease in the solid solution content of C or may adversely affect the formation behavior of the compound particle including titanium and carbon. Therefore, the B content is 0.300% or less. The B content is preferably 0.100 or less, more preferably 0.050% or less.

<Al: 0.000 to 0.500%>

Al has a strength improving-action. However, the titanium material according to the present embodiment secures strength by other means. Therefore, the lower limit of the Al content may be 0.000%. The lower limit of the Al content is preferably 0.010%, and more preferably 0.020%. On the other hand, as the Al content increases, the ductility and toughness of the titanium material deteriorate. Therefore, the Al content is 0.000 to 0.500%. The upper limit of the Al content is preferably 0.350%, more preferably 0.200%.

<Ca: 0.000 to 0.200%>

Ca has an effect of improving local corrosion resistance and stress corrosion cracking resistance. However, the titanium material according to the present embodiment secures local corrosion resistance and stress corrosion cracking resistance by other means. Therefore, the lower limit of the Ca content may be 0.000%. The lower limit of the Ca content is preferably 0.002%, and more preferably 0.005%. On the other hand, as the Ca content increases, the ductility and toughness of the titanium material deteriorate. Therefore, the Ca content is 0.000 to 0.200%. The upper limit of the Ca content is preferably 0.100%, more preferably 0.040%.

<Sc: 0.000 to 0.100%>

Sc has an effect of improving local corrosion resistance and stress corrosion cracking resistance. However, the titanium material according to the present embodiment secures local corrosion resistance and stress corrosion cracking resistance by other means. Therefore, the lower limit of the Sc content may be 0.000%. The lower limit of the Sc content is preferably 0.001%, and more preferably 0.003%. On the other hand, as the Sc content increases, the ductility and toughness of the titanium material deteriorate. Therefore, the Sc content is 0.000 to 0.100%. The upper limit of the Sc content is preferably 0.060%, more preferably 0.030%.

<V: 0.000 to 0.500%>

V has a strength improving-action. However, the titanium material according to the present embodiment secures strength by other means. Therefore, the lower limit of the V content may be 0.000%. The lower limit of the V content is preferably 0.010%, and more preferably 0.020%. On the other hand, V is a strong $\beta$-stabilizing element. When the V content is large, it is difficult to obtain a microstructure mainly made of the $\alpha$ phase. Therefore, the V content is 0.500% or less. The upper limit of the V content is preferably 0.200%, more preferably 0.100%.

<Co: 0.000 to 0.600%>

Co has an effect of improving corrosion resistance and local corrosion resistance. However, the titanium material according to the present embodiment secures corrosion resistance and local corrosion resistance by other means. Therefore, the lower limit of the Co content may be 0.000%. The lower limit of the Co content is preferably 0.010% and more preferably 0.020%. On the other hand, Co is an element capable of forming a compound with Ti. When the Co content is large, a compound of Co and Ti is formed, and the ductility and workability of the titanium material are poor. Therefore, the Co content is 0.600% or less. The upper limit of the Co content is preferably 0.100%, more preferably 0.050%.

<Ni: 0.000 to 0.400%>

Ni has an effect of improving corrosion resistance and local corrosion resistance. However, the titanium material according to the present embodiment secures corrosion resistance and local corrosion resistance by other means. Therefore, the lower limit of the Ni content may be 0.000%. The lower limit of the Ni content is preferably 0.002%, and more preferably 0.005%. On the other hand, Ni is an element capable of forming a compound with Ti. When the Ni content is large, a compound of Ni and Ti is formed, and the ductility and workability of the titanium material are poor. Therefore, the Ni content is 0.400% or less. The upper limit of the Ni content is preferably 0.200%, more preferably 0.150%.

<Zn: 0.000 to 0.300%>

Zn has an effect of improving local corrosion resistance. However, the titanium material according to the present embodiment secures local corrosion resistance by other means. Therefore, the lower limit of the Zn content may be 0.000%. The lower limit of the Zn content is preferably 0.001%, and more preferably 0.002%. On the other hand, as the Zn content increases, the ductility and toughness of the titanium material deteriorate. Therefore, the Zn content is 0.000 to 0.300%. The upper limit of the Zn content is preferably 0.150%, more preferably 0.050%.

<Ga: 0.000 to 0.200%>

Ga has an effect of improving local corrosion resistance. However, the titanium material according to the present embodiment secures local corrosion resistance by other means. Therefore, the lower limit of the Ga content may be 0.000%. The lower limit of the Ga content is preferably 0.001%, and more preferably 0.005%. On the other hand, as the Ga content increases, the ductility and toughness of the titanium material deteriorate. Therefore, the Ga content is 0.000 to 0.200%. The upper limit of the Ga content is preferably 0.100%, more preferably 0.050%.

<Ge: 0.000 to 0.200%>

Ge has an effect of improving local corrosion resistance. However, the titanium material according to the present embodiment secures local corrosion resistance by other means. Therefore, the lower limit of the Ge content may be 0.000%. The lower limit of the Ge content is preferably 0.001 %, and more preferably 0.005%. On the other hand, as the Ge content increases, the ductility and toughness of the titanium material deteriorate. Therefore, the Ge content is 0.000 to 0.200%. The upper limit of the Ge content is preferably 0.100%, more preferably 0.050%.

<Y: 0.000 to 0.300%>

Y has an effect of improving local corrosion resistance and stress corrosion cracking resistance. However, the titanium material according to the present embodiment secures local corrosion resistance and stress corrosion cracking resistance by other means. Therefore, the lower limit of the Y content may be 0.000%. The lower limit of the Y content is preferably 0.001%, and more preferably 0.002%. On the other hand, as the Y content increases, the ductility and toughness of the titanium material deteriorate. Therefore, the Y content is 0.000 to 0.300%. The upper limit of the Y content is preferably 0.120%, more preferably 0.060%.

<Nb: 0.000 to 0.150%>

Nb has a corrosion resistance improving-action. However, the titanium material according to the present embodiment secures corrosion resistance by other means. Therefore, the lower limit of the Nb content may be 0.000%. The lower limit of the Nb content is preferably 0.050%, and more preferably 0.070%. On the other hand, as the Nb content increases, the ductility of the titanium material deteriorates. Therefore, the Nb content is 0.000 to 0.150%. The upper limit of the Nb content is preferably 0.130%, more preferably 0.100%.

<Mo: 0.000 to 0.250%>

Mo has a strength improving-action. However, the titanium material according to the present embodiment secures strength by other means. Therefore, the lower limit of the Mo content may be 0.000%. The lower limit of the Mo content is preferably 0.005%, and more preferably 0.010%. On the other hand, as the Mo content increases, the ductility of the titanium material deteriorates. Therefore, the Mo content is 0.250% or less. The upper limit of the Mo content is preferably 0.200%, more preferably 0.100%.

<Ag: 0.000 to 0.100%>

Ag has an effect of improving local corrosion resistance. However, the titanium material according to the present embodiment secures local corrosion resistance by other means. Therefore, the lower limit of the Ag content may be 0.000%. The lower limit of the Ag content is preferably 0.010%, and more preferably 0.015%. On the other hand, as the Ag content increases, the ductility of the titanium material deteriorates. Therefore, the Ag content is 0.000 to 0.100%. The upper limit of the Ag content is preferably 0.080%, more preferably 0.060%.

<Cd: 0.000 to 0.200%>

Cd has an effect of improving local corrosion resistance. However, the titanium material according to the present embodiment secures local corrosion resistance by other means. Therefore, the lower limit of the Cd content may be 0.000%. The lower limit of the Cd content is preferably 0.005% and more preferably 0.010%. On the other hand, as the Cd content increases, the ductility of the titanium material deteriorates. Therefore, the Cd content is 0.000 to 0.200%. The upper limit of the Cd content is preferably 0.120%, more preferably 0.080%.

<In: 0.000 to 0.100%>

In has an effect of improving local corrosion resistance. However, the titanium material according to the present embodiment secures local corrosion resistance by other means. Therefore, the lower limit of the In content may be 0.000%. The lower limit of the In content is preferably 0.005%, and more preferably 0.008%. On the other hand, as the In content increases, the ductility of the titanium material deteriorates. Therefore, the In content is 0.000 to 0.100%. The upper limit of the In content is preferably 0.070%, more preferably 0.050%.

<Sb: 0.000 to 0.100%>

Sb has an effect of improving local corrosion resistance. However, the titanium material according to the present embodiment secures local corrosion resistance by other means. Therefore, the lower limit of the Sb content may be 0.000%. The lower limit of the Sb content is preferably 0.002%, and more preferably 0.005%. On the other hand, as the Sb content increases, the ductility of the titanium material deteriorates. Therefore, the Sb content is 0.000 to 0.100%. The upper limit of the Sb content is preferably 0.060%, more preferably 0.050%.

<Bi: 0.000 to 0.180%>

Bi has an effect of improving local corrosion resistance. However, the titanium material according to the present embodiment secures local corrosion resistance by other means. Therefore, the lower limit of the Bi content may be 0.000%. The lower limit of the Bi content is preferably 0.002%, and more preferably 0.005%. On the other hand, as the Bi content increases, the ductility of the titanium material deteriorates. Therefore, the Bi content is 0.000 to 0.180%. The upper limit of the Bi content is preferably 0.150%, more preferably 0.080%.

<Hf: 0.000 to 0.300%>

Hf has a corrosion resistance improving-action. However, the titanium material according to the present embodiment secures corrosion resistance by other means. Therefore, the lower limit of the Hf content may be 0.000%. The lower limit of the Hf content is preferably 0.002%, and more preferably 0.004%. On the other hand, as the Hf content increases, the ductility of the titanium material deteriorates. Therefore, the Hf content is 0.000 to 0.300%. The upper limit of the Hf content is preferably 0.240%, more preferably 0.140%.

<Ta: 0.000 to 0.300%>

Ta has a corrosion resistance improving-action. However, the titanium material according to the present embodiment secures corrosion resistance by other means. Therefore, the lower limit of the Ta content may be 0.000%. The lower limit of the Ta content is preferably 0.020%, and more preferably 0.050%. On the other hand, as the Ta content increases, the ductility of the titanium material deteriorates. Therefore, the Ta content is 0.000 to 0.300%. The upper limit of the Ta content is preferably 0.250%, more preferably 0.220%.

<W: 0.000 to 0.600%>

W has a corrosion resistance improving-action. However, the titanium material according to the present embodiment secures corrosion resistance by other means. Therefore, the lower limit of the W content may be 0.000%. The lower limit of the W content is preferably 0.050%, and more preferably 0.080%. On the other hand, as the W content increases, ductility deteriorates. Therefore, the W content is 0.000 to 0.600%. The upper limit of the W content is preferably 0.500%, more preferably 0.450%.

<Re: 0.000 to 0.300%>

Re has an effect of improving corrosion resistance, local corrosion resistance, and stress corrosion cracking resistance. However, the titanium material according to the present embodiment secures strength by other means. Therefore, the lower limit of the Re content may be 0.000%. The lower limit of the Re content is preferably 0.001%, and more preferably 0.002%. On the other hand, as the Re content increases, the ductility of the titanium material deteriorates. Therefore, the Re content is 0.000 to 0.300%. The upper limit of the Re content is preferably 0.100%, more preferably 0.050%.

<Au: 0.000 to 0.100%>

Au has an effect of improving corrosion resistance, local corrosion resistance, and stress corrosion cracking resistance. However, the titanium material according to the present embodiment secures strength by other means. Therefore, the lower limit of the Au content may be 0.000%. The lower limit of the total Au content is preferably 0.005%, and more preferably 0.010%. On the other hand, as the Au content increases, the ductility of the titanium material deteriorates. Therefore, the Au content is 0.000 to 0.100%. The upper limit of the Au content is preferably 0.080%, more preferably 0.040%.

<One or more of Pt, Pd, Ru, Ir, Rh, and Os: 0.000 to 0.200% in total>

Pt, Pd, Ru, Ir, Rh, and Os have an effect of improving corrosion resistance, local corrosion resistance, and stress corrosion cracking resistance. However, the titanium material according to the present embodiment secures strength by other means. Therefore, the lower limit of the total content of Pt, Pd, Ru, Ir, Rh, and Os may be 0.000%. The lower limit of the total content of Pt, Pd, Ru, Ir, Rh, and Os is preferably 0.002%, and more preferably 0.004%. On the other hand, when the total content of Pt, Pd, Ru, Ir, Rh, and Os is large, the ductility of the titanium material deteriorates. Therefore, the total content of Pt, Pd, Ru, Ir, Rh, and Os is 0.200% or less. The upper limit of the total content of Pt, Pd, Ru, Ir, Rh, and Os is preferably 0.080%, and more preferably 0.060%.

<Total content of Mn, Cu, Cr, Sn, and Zr: 0.00 to 0.20%>

In the titanium material not containing C, Mn, Cu, Cr, Sn, and Zr have a poor effect of improving corrosion resistance, local corrosion resistance, and stress corrosion cracking resistance. However, the present inventors have found that when a titanium material including 0.10% to 0.30% of C is added with a trace amount of one or more of Mn, Cu, Cr, Sn, and Zr, further subjected to cold working at a rolling reduction of 10% or more, and then subjected to heat treatment in patterns A, B, and C described later, an effect of further improving corrosion resistance, local corrosion resistance, and stress corrosion cracking resistance can be exhibited. When a titanium material containing C as the titanium material according to the present embodiment includes one or more of Mn, Cu, Cr, Sn, and Zr in a total amount of 0.01% or more, it is difficult to dissolve the passive film containing a titanium oxide as a main constituent material, and an effect of further improving corrosion resistance, local corrosion resistance, and stress corrosion cracking resistance can be obtained.
In the titanium material according to the present embodiment, Mn, Cu, Cr, Sn, and Zr are not essential, and the total content of Mn, Cu, Cr, Sn, and Zr may be 0.00%, or may be less than 0.01%. However, when the total content of Mn, Cu, Cr, Sn, and Zr is 0.01% or more, the effect of improving corrosion resistance, local corrosion resistance, and stress corrosion cracking resistance can be further improved. Therefore, when one or more of Mn, Cu, Cr, Sn, and Zr are included, the lower limit of the total content of these elements may be 0.01%, 0.02%, or 0.05%.
However, when the total content of Mn, Cu, Cr, Sn, and Zr is excessively large, a metallographic structure, an intermetallic compound, and the like unnecessary for the titanium material according to the present embodiment such as $Ti_2Cu$ may be formed, which is not preferable. Therefore, the upper limit of the total content of Mn, Cu, Cr, Sn, and Zr is 0.20% or less. The upper limit of the total content of Mn, Cu, Cr, Sn and Zr is preferably 0.10% and more preferably 0.08%. Mn, Cu, Cr, Sn, and Zr may be included alone, or two or more kinds thereof may be included.
The balance of the chemical composition of the titanium material according to the present embodiment is Ti and impurities. The impurity means, for example, a component that is mixed into the titanium material due to various factors in a raw material or a manufacturing process when the titanium material is industrially manufactured, and is acceptable as long as it does not adversely affect the titanium material according to the present embodiment.

(2.2. Metallographic Structure of Titanium Material of Present Embodiment)

Next, the metallographic structure of the titanium material according to the present embodiment will be described.

<Average Diameter of Compound Particle including Titanium and Carbon included in Titanium Material: 400 nm or shorter>

The titanium material according to the present embodiment includes a particle such as an inclusion and a precipitate mainly including titanium and carbon.
In general, the particle included in a titanium material improves the strength of the titanium material, but decreases the ductility and workability of the titanium material. Therefore, in the prior art, a titanium material securing strength by using a compound particle including titanium and carbon does not necessarily have sufficient ductility.
However, in the titanium material according to the present embodiment, the average diameter of the compound particle including titanium and carbon is 400 nm or shorter. As a result, the strength of the titanium material and the ductility and workability of the titanium material can be compatible at a high level, and an excellent balance in strength and ductility can be achieved.
In addition, the compound particle including titanium and carbon improves the corrosion resistance of the titanium material. However, when the size of the compound particle including titanium and carbon is inappropriate, improvement in local corrosion resistance and stress corrosion cracking resistance is not sufficient. Therefore, in the present embodiment, the average diameter of the compound particle including titanium and carbon is controlled.
In addition, when the compound particle including titanium and carbon has a small average diameter, the titanium material has a significant effect on improving ductility, workability, balance in strength and ductility, and local corrosion resistance. When there is a large misfit at the interface between the parent phase and the compound particle including titanium and carbon, the interface can be a starting point of cracking during processing or local corrosion of the titanium material. However, when the average diameter of the compound particle including titanium and carbon is reduced, cracking or local corrosion is suppressed at the interface between the parent phase and the compound particle including titanium and carbon. This effect is remarkably exhibited when the average diameter of the compound particle including titanium and carbon is 400 nm or shorter.

The lower limit of the average diameter of the compound particle including titanium and carbon is preferably 1 nm, more preferably 2 nm. The upper limit of the average diameter of the compound particle including titanium and carbon is preferably 200 nm, more preferably 150 nm, still more preferably 100 nm, and still more preferably 10 nm.

In the titanium material according to the present embodiment, other configurations of the metallographic structure are not particularly limited as long as the average diameter of the compound particle including titanium and carbon is within the above-described range. Preferred examples of the metallographic structure will be described below.

<Maximum Diameter of Particle: preferably 5 $\mu$m (5000 nm) or shorter>

When the average diameter of the compound particle including titanium and carbon falls within the above-mentioned range, it is acceptable that coarse particles are included in the titanium material. The "particle" is a compound particle including titanium and carbon.

On the other hand, when the formation of coarse particles is suppressed and the maximum particle diameter of the particles included in the titanium material is 5 $\mu$m or shorter, the mechanical properties of the titanium material are further improved. Therefore, the maximum particle diameter of the particles included in the titanium material may be defined as 5 $\mu$m or shorter.

<Type and Proportion of Compound Particle including Titanium and Carbon: A value, which is an index of the proportion of $Ti_2C$, is preferably 0.10 or more>

In the titanium material according to the present embodiment, the type of main carbide constituting the compound particle including titanium and carbon is not particularly limited. When the average diameter of the compound particle including titanium and carbon is 400 nm or shorter, good characteristics are obtained regardless of the kind of carbide included in the particle.

It is generally recognized that various carbides that can be formed in a titanium material are mainly TiC. On the other hand, $Ti_2C$ is preferable for further improving the various properties of a titanium material. Therefore, in the titanium material according to the present embodiment, the amount of $Ti_2C$ may be defined via the A value calculated by the following formulae.

[Mathematical Formula 2]

$$A = I_{Ti2C}/(1.3 I_{TiC} + I_{Ti2C})$$

$$I_{TiC} = \left\{ \sum \left( I_{TiC(hkl)}/R_{TiC(hkl)} \right) \right\}/n$$

$$I_{Ti2C} = \left\{ \sum \left( I_{Ti2C(hkl)}/R_{Ti2C(hkl)} \right) \right\}/n$$

Herein, $I_{TiC}$ is a representative value of an integrated intensity of TiC, which is a kind of the compound particle including titanium and carbon, $I_{Ti2C}$ is a representative value of an integrated intensity of $Ti_2C$, which is a kind of the compound particle including titanium and carbon, $I_{TiC(hkl)}$ is a measured integrated intensity for each Miller index of the TiC, $I_{Ti2C(hkl)}$ is a measured integrated intensity for each Miller index of the $Ti_2C$, $R_{TiC(hkl)}$ is a coefficient corresponding to each Miller index of the TiC, $R_{Ti2C(hkl)}$ is a coefficient corresponding to each Miller index of the $Ti_2C$, and n is 5. $R_{TiC(hkl)}$ and $R_{Ti2C(hkl)}$ correspond to each Miller index as shown in the following table.

[Table 2]

| Miller index | $R_{TiC\ (hkl)}$ | $R_{Ti2C\ (hkl)}$ |
|---|---|---|
| (111) | 0.94 | |

(continued)

| Miller index | $R_{TiC (hkl)}$ | $R_{Ti2C (hkl)}$ |
|---|---|---|
| (200) | 1.00 | |
| (220) | 0.46 | |
| (311) | 0.22 | |
| (222) | 0.14 | |
| (111) | | 0.12 |
| (222) | | 1.00 |
| (400) | | 0.70 |
| (440) | | 0.33 |
| (620) | | 0.22 |

The A value is an index of the proportion of TiC and $Ti_2C$ in the compound particle including titanium and carbon formed in the titanium material. A specific method for measuring the A value will be described later.

In the titanium material according to the present embodiment, the type of carbide is not limited, and thus the A value may be 0. In this case, it is estimated that the compound particle including titanium and carbon hardly contain $Ti_2C$. On the other hand, it is preferable that $Ti_2C$ be generated in the titanium material so that the A value is 0.10 or more. $Ti_2C$ is a metastable phase that is unstable in thermodynamic equilibrium and in dynamics as compared with TiC. The critical resolved shear stress of $Ti_2C$ is smaller than that of TiC. Therefore, a titanium material including $Ti_2C$ is easily plastically deformed. In a titanium material in which TiC (or a compound particle including titanium and carbon) is formed, it is usually difficult to achieve strength together with ductility and workability. However, when $Ti_2C$, which is easily plastically deformed, is formed in the titanium material, the strength of the titanium material can be improved without impairing ductility or workability. Therefore, the A value is preferably 0.10 or more. When the proportion of $Ti_2C$ to TiC is increased, the titanium material can have further improved ductility and workability, and further improved balance in strength and ductility.

In addition, the titanium material in which $Ti_2C$ is formed has further improved corrosion resistance, local corrosion resistance, and stress corrosion cracking resistance. This is because $Ti_2C$ has a higher cathodic reaction promoting ability than TiC, and can promote noble potential not only in the compound particle including titanium and carbon but also in the titanium material itself including the compound particle. The titanium material has a wide passive region in the noble potential region. Therefore, when the potential of the titanium material itself becomes noble, passivation is promoted, and better corrosion resistance is exhibited. That is, when the A value is 0.10 or more and the proportion of $Ti_2C$ is increased, passivation of titanium is further promoted, and corrosion resistance, local corrosion resistance, and stress corrosion cracking resistance are improved.

When the A value is 0.10 or more, these effects are remarkably obtained. The lower limit of the A value is preferably 0.40, more preferably 0.60, and still more preferably 0.80.

<Type of Compound Particle including Titanium and Carbon: more preferably including $Ti_3C_2$>

The electron energy state derived from a C atom constituting $Ti_3C_2$ is different from that of TiC or $Ti_2C$. When the titanium material includes $Ti_3C_2$, the interface contact resistance, hydrogen overvoltage, and oxygen overvoltage of the titanium material can be further improved. Therefore, the titanium material according to the present embodiment preferably includes $Ti_3C_2$.

$Ti_3C_2$ is a metastable phase that is unstable in thermodynamic equilibrium and in dynamics as compared with TiC. The critical resolved shear stress of $Ti_3C_2$ is smaller than that of TiC. Therefore, a titanium material including $Ti_3C_2$ is easily plastically deformed. In a titanium material, it is usually difficult to achieve strength together with ductility and workability. However, when $Ti_3C_2$, which is easily plastically deformed, is formed in the titanium material, the strength can be improved without impairing ductility or workability. That is, when the titanium material includes $Ti_2C_3$, the titanium material can have further improved ductility such as elongation and workability, and further improved balance in strength and ductility. This effect is similar to that of $Ti_2C$.

In addition, the effect of $Ti_3C_2$ to improve the interface contact resistance, hydrogen overvoltage, and oxygen overvoltage of the titanium material is larger than that of $Ti_2C$. The titanium material in which $Ti_3C_2$ is formed is further improved. This is because the electrical conductivity and hydrogen and oxygen generating ability of $Ti_3C_2$ are higher than those of other compound particles including titanium and carbon such as TiC. The titanium material may include both $Ti_2C$

and $Ti_3C_2$. Most preferably, the A value in the titanium material is 0.10 or more, and the titanium material includes $Ti_3C_2$.

The critical resolved shear stress of $Ti_2C$ and $Ti_3C_2$ having an average diameter of 400 nm or shorter is smaller than the critical resolved shear stress of TiC. Therefore, the use of $Ti_2C$ and $Ti_3C_2$ makes it possible to obtain a titanium material that has better corrosion resistances described later and has all of ductility such as high elongation, workability, and balance in strength and ductility in a higher level.

An example of the method for controlling the compound particle including titanium and carbon as described above will be described. In the compound particle including titanium and carbon, the proportion of TiC and $Ti_2C$ and whether $Ti_3C_2$ is present in the compound particle are affected by the heat treatment pattern and the heat treatment conditions. Specifically, these embodiments of the compound particle depend on stay time and holding time at a relatively low temperature of 200°C to 590°C. As the stay time and the holding time at 200°C to 590°C, where metastable $Ti_2C$ or $Ti_3C_2$ is formed, are longer, the proportion of $Ti_2C$ finally present in the material can be increased, and further, $Ti_3C_2$ can be formed. Some of $Ti_2C$ and $Ti_3C_2$ are transformed to TiC through the subsequent temperature increase and holding at 600°C to 850°C. However, when the stay time and the holding time at 200°C to 590°C is longer, the index of the proportion of TiC and $Ti_2C$ can be 0.10 or more in the formed compound particle including titanium and carbon, and $Ti_3C_2$ can be formed.

Regarding corrosion resistance, local corrosion resistance, and stress corrosion cracking resistance, a titanium material in which $Ti_2C$ and $Ti_3C_2$ are formed is remarkably superior to a titanium material in which TiC is formed. $Ti_2C$ and $Ti_3C_2$ have a higher cathodic reaction promoting ability than TiC, and can promote noble potential not only in the compound particle including titanium and carbon but also in the titanium material itself including the compound particle. Titanium has a wide passive region in the high potential region. Therefore, when the index of the proportion of TiC and $Ti_2C$ is high in the formed compound particle including titanium and carbon, passivation is promoted, and corrosion resistance, local corrosion resistance, and stress corrosion cracking resistance can be improved. Furthermore, when the titanium material includes $Ti_3C_2$, these characteristics can be further improved.

Note that, in the same manner as the various compounds exist within an arbitrary composition ratio range, it is not required that $Ti_2C$ and $Ti_3C_2$ in the titanium material according to the present embodiment include Ti atoms and C atoms in a stoichiometric composition. That is, a Ti carbide whose diffraction peaks in X-ray diffraction measurement coincide with the diffraction angles ($2\theta$) determined from the crystal lattice structure of $Ti_2C$ is regarded as $Ti_2C$. A carbide whose ratio of Ti atoms and C atoms is not completely 2 : 1, such as a carbide including atomic vacancies, is also determined as $Ti_2C$ as long as the above-described requirements are satisfied. In addition, (spectral intensity at 282.0 eV)/(spectral intensity at 281.5 eV) of the C1s orbit of $Ti_3C_2$ is used as a criterion for determining whether $Ti_3C_2$ is present. The unit of the spectral intensity is count/second. When the average value of (spectral intensity at 282.0 eV)/(spectral intensity at 281.5 eV) at three measurement points is 0.60 or more, it is determined that the titanium material includes $Ti_3C_2$.

A carbide whose ratio of Ti atoms and C atoms is not completely 3 : 2, such as a carbide including atomic vacancies, is also determined as $Ti_3C_2$ as long as the above-described requirements are satisfied.

The volume percentage of the compound particle including titanium and carbon is not particularly limited in the titanium material. The proportion of the integrated intensity of the X-ray diffraction peak of the total compound particles including titanium and carbon to the integrated intensity of the X-ray diffraction peak of the $\alpha$ phase may be 0.01 or more.

The titanium material according to the present embodiment has a metallographic structure mainly made of the $\alpha$ phase due to the above-described chemical composition. In addition to the $\alpha$ phase, the $\beta$ phase may be included in the metallographic structure. For example, the proportion of the $\beta$ phase in the titanium material may be less than 1 Vol%. In addition, the proportion of the total amount of the $\alpha$ phase and the compound particle including titanium and carbon may be 96 Vol% or more in the titanium material. Due to the use environment of the titanium material, a titanium hydride may be formed in the titanium material. The titanium material according to the present embodiment may also include titanium hydride. For example, the proportion of the amount of titanium hydride may be less than 3 Vol% in the titanium material. Note that the "Vol%" means a percentage in volume.

(2.3. Method for Evaluating Metallographic Structure of Titanium Material of Present Embodiment)

The metallographic structure of the titanium material in the present embodiment can be specified by the following method.

<Method for Specifying Average Diameter of Compound Particle including Titanium and Carbon>

The average diameter of the compound particle including titanium and carbon can be measured by observing a cross section of the titanium material with SEM and TEM. The data to be employed varies depending on the size of the average diameter of the compound particle including titanium and carbon. First, the average diameter of the compound particle including titanium and carbon is measured using SEM. When the SEM observation result indicates that the compound particle including titanium and carbon has an average diameter of 400 nm or longer, SEM data is adopted.

When the average diameter of the compound particle including titanium and carbon obtained using SEM is shorter than 400 nm, TEM measurement is further performed and the TEM data is adopted.

In the SEM observation, first, two observed sections are determined. The two cross sections are: an arbitrary cross section that is parallel to the sheet thickness direction of the titanium material (cross section 1); and a cross section that is parallel to the sheet thickness direction of the titanium material and satisfies perpendicular relationship with the cross section 1 (cross section 2). For example, when the cross section 1 is a L cross section of the titanium material, the cross section 2 is a T cross section of the titanium material. The L cross section is a cross section that is parallel to the rolling direction of the titanium material and perpendicular to the rolled surface, and the T cross section is a cross section that is perpendicular to the rolling direction of the titanium material and perpendicular to the rolled surface.

The cross section 1 and the cross section 2 are mirror-polished, and then the cross sections are polished using a colloidal silica-containing liquid as a polishing liquid. The obtained surfaces are observed. These cross sections are observed with a scanning electron microscope at magnifications of 1000 times, 3000 times, 5000 times, and 10000 times. Then, the magnification at which an image including 5 or more and 20 or less particles in the observed visual field is obtained is adopted for specifying the average diameter. When 5 or more and 20 or less particles are included at 2 or more observation magnifications, the observation result at a higher magnification is adopted.

At the employed magnification, five visual fields are observed in the cross section 1, and five visual fields are also observed in the cross section 2. The number of observed visual fields is 10 in total. Then, the average diameter of the particles is calculated in each of the 10 visual fields. When an elliptic particle is observed, the average value of the major axis length and the minor axis length of the particle is regarded as the diameter of the particle. Then, for the average diameter of the particles calculated in each of the 10 visual fields, an arithmetic mean value is calculated. The arithmetic mean value is defined as the average diameter of the particles included in the titanium material. When the average diameter of the particles is calculated by scanning electron microscope observation, the particles having a diameter of shorter than 100 nm are excluded from the observation target. When an elliptic particle is observed, the particles having a major axis length of shorter than 100 nm are excluded from the observation target.

In addition, the particles are subjected to point analysis by EDS provided in the scanning electron microscope. In addition, XRD (X-ray diffraction) analysis is also performed. The conditions of X-ray diffraction are as follows.

· Characteristic X-ray: CoK$\alpha$ ray
· Voltage: 30 kV
· Current: 100 mA
· Measurement range: $10° \leq 2\theta \leq 110°$
· Step: 0.04°
· Measurement method: $\theta$-2$\theta$ method

Based on the position of the X-ray diffraction peaks, the $\alpha$ phase, the $\beta$ phase, Ti$_2$C, and TiC can be identified. A phase whose diffraction peak intensity is less than or equal to the background is considered to have not been detected.

A particle satisfying the following two conditions is regarded as the compound particle including titanium and carbon.

(1) As a result of point analysis by SEM-EDS, both Ti and C are detected.
(2) As a result of XRD analysis, one or both of TiC and Ti$_2$C are detected.

When it is confirmed that all the particles visually recognized in the above-described SEM observation include both Ti and C, the average diameter of the particles calculated by the above-described SEM observation is regarded as the average diameter of the compound particle including Ti and C. When some or all of the particles visually recognized in the above-described SEM observation do not include one or both of Ti and C, the average diameter is measured again only for particles including both of Ti and C.

Also in the TEM observation, first, two observed sections are determined. The two cross sections are: an arbitrary cross section that is parallel to the sheet thickness direction of the titanium material (cross section 1); and a cross section that is parallel to the sheet thickness direction of the titanium material and satisfies perpendicular relationship with the cross section 1 (cross section 2), as described above.

A sample is collected from the cross section 1 and the cross section 2 by FIB processing and used for TEM observation. Observation is performed with a transmission electron microscope at magnifications of 5000 times, 20000 times, 50000 times, 100000 times, and 300000 times, and the magnification at which a pixel including 5 or more and 20 or less particles in the observed visual field is obtained is adopted for specifying the average diameter.

At the employed magnification, five visual fields are observed in the cross section 1, and five visual fields are observed in the cross section 2. The number of observed visual fields is 10 in total. Then, the average diameter of the particles is calculated in each of the 10 visual fields. When an elliptic particle is observed, the average value of the major axis length and the minor axis length of the particle is regarded as the diameter of the particle. Then, for the average diameter of the particles calculated in each of the 10 visual fields, an arithmetic mean value is calculated. The arithmetic mean value is defined as the average diameter of the particles included in the titanium material. When the average diameter of the particles is calculated by transmission electron microscope observation, the particles having a diameter of shorter than 1 nm are excluded from the observation target. When an elliptic particle is observed, the particles having a major axis length of shorter than 1 nm are excluded from the observation target.

In addition, the particles are subjected to point analysis by EDS provided in the transmission electron microscope, and in addition, XRD analysis is also performed under the conditions described above. A particle satisfying the following two conditions is regarded as the compound particle including titanium and carbon.

(1) As a result of point analysis by TEM-EDS, both Ti and C are detected.
(2) As a result of XRD analysis, one or both of TiC and $Ti_2C$ are detected.

By this checking operation, it can be determined whether or not the particles include Ti and C. When it is confirmed that all the particles visually recognized in the above-described TEM observation include both Ti and C, the average diameter of the particles calculated by the above-described TEM observation is regarded as the average diameter of the compound particle including Ti and C. When some or all of the particles visually recognized in the above-described TEM observation do not include one or both of Ti and C, the average diameter is measured again only for particles including both of Ti and C. In addition, the crystal structure of the carbide may be confirmed by an electron beam diffraction pattern or a fast Fourier transform pattern of the transmission electron microscope.

<Method for Specifying A Value>

The A value is calculated from the integrated intensity of the diffraction peaks of $Ti_2C$ and TiC measured by X-ray diffraction performed under the above conditions.

An example of the method for calculating the A value will be described. For TiC, five diffraction planes of (1 1 1), (2 0 0), (2 2 0), (3 1 1), and (2 2 2) were adopted. For $Ti_2C$, five diffraction planes of (1 1 1), (2 2 2), (4 0 0), (4 4 0), and (6 2 0), $Ti_2C$ (2 2 2), were adopted. The numerical values in parentheses are the Miller index (h k 1) of a crystal. The A value is calculated from the formulae 3, 4, and 5 using the measured integrated intensity in the 2θ range and the following coefficients.

[Table 3]

| Miller index | $R_{TiC (hkl)}$ | $R_{Ti2C (hkl)}$ |
|---|---|---|
| (111) | 0.94 | |
| (200) | 1.00 | |
| (220) | 0.46 | |
| (311) | 0.22 | |
| (222) | 0.14 | |
| (111) | | 0.12 |
| (222) | | 1.00 |
| (400) | | 0.70 |
| (440) | | 0.33 |
| (620) | | 0.22 |

First, the integrated intensity of the diffraction planes and the coefficients are substituted in the following formulae to calculate $I_{TiC}$ and $I_{Ti2C}$.

[Mathematical Formula 3]

$$I_{TiC} = \left\{ \sum \left( I_{TiC(hkl)} / R_{TiC(hkl)} \right) \right\} / n$$

Herein, $I_{TiC(hkl)}$ is a measured integrated intensity, $R_{TiC(hkl)}$ is the above-described coefficient, and n = 5.

[Mathematical Formula 4]

$$I_{Ti2C} = \left\{\sum\left(I_{Ti2C(hkl)}/R_{Ti2C(hkl)}\right)\right\}/n$$

Herein, $I_{Ti2C(hkl)}$ is a measured integrated intensity, $R_{Ti2C(hkl)}$ is the above-described coefficient, and n = 5.
Next, the A value is calculated from the following formula using the calculated $I_{TiC}$ and $I_{Ti2C}$.

[Mathematical Formula 5]

$$A = I_{Ti2C}/(1.3 I_{TiC} + I_{Ti2C})$$

<Method for specifying $Ti_3C_2$>

Whether $Ti_3C_2$ is present is confirmed by XPS. The X-ray used is an Al Kα ray. The diameter of the analysis region is 10 μmφ. First, the measurement sample is sputtered to a depth of 20 nm. Thus, the contamination and the oxides on the surface of the measurement sample are removed. Next, the measurement sample is subjected to narrow scan spectrum analysis in a range including 280.00 to 284.00 eV. The narrow scan is performed with a measurement pitch of 0.05 eV or less in binding energy. The measurement is performed three times at each measurement point, and the average data of the three measurements is calculated. The spectral intensities at 282.00 eV and 281.50 eV in the calculated data are adopted as a criterion for determining whether $Ti_3C_2$ is present. Specifically, (spectral intensity at 282.00 eV)/(spectral intensity at 281.50 eV) is used as a criterion for determining whether $Ti_3C_2$ is present. The unit of the spectral intensity is count/second. When the average value of (spectral intensity at 282.00 eV)/(spectral intensity at 281.50 eV) at three measurement points is 0.60 or more, it is determined that the titanium material includes $Ti_3C_2$.

(3. Example of Manufacturing Method of Titanium Material of Present Embodiment)

Next, the preferred manufacturing method of the titanium material according to the present embodiment will be described. According to the manufacturing method, the titanium material having the above-described features can be obtained. However, in the titanium material according to the present embodiment, the manufacturing method thereof is not particularly limited. Even a titanium material obtained under manufacturing conditions different from those described below belongs to the titanium material according to the present embodiment as long as the chemical composition and the average diameter of the compound particle including titanium and carbon are within the above ranges. In the following description, the "s" means second.
Examples of the suitable manufacturing method of the titanium material according to the present embodiment include:

(S1) a step of smelting an ingot, a slab, a billet, or a bloom having the same chemical composition as that of the titanium material according to the present embodiment;
(S2) a step of subjecting the ingot, the slab, the billet, or the bloom to blooming or hot forging to obtain a semi-finished product;
(S3) a step of subjecting the semi-finished product obtained in the S2 step to hot working to obtain a hot working material;
(S4) a step of subjecting the hot working material to intermediate annealing if necessary;
(S5) a step of subjecting the hot working material to cold working to obtain a cold working material; and
(S6) a step of subjecting the cold working material to additional annealing. The step of subjecting the ingot, the slab, the billet, or the bloom to blooming or hot forging described in (S2) may be omitted when the shape of the ingot, the slab, the billet, or the bloom does not hinder the execution of (S3). The steps S5 and S6 may be repeated two or more times. The steps S3 to S6 are performed under the conditions shown in the following table. Surface manipulation by grinding and cutting may be performed before and after these steps. Blast, pickling, and the like may be performed before and after these steps as necessary.

(Smelting S1)

(Blooming or Hot Forging S2)

First, an ingot or a slab having components within the above range is smelted. As necessary, a billet or a bloom may be smelted. The smelting method is not particularly limited. Various known smelting methods such as vacuum arc melting, electron beam melting, and plasma melting can be used. Next, the ingot or the slab is subjected to blooming or hot forging. Blooming or hot forging may be omitted when the shape of the ingot, the slab, the billet, or the bloom does not hinder the execution of (S3) hot working. The method of blooming or hot forging is not particularly limited. Surface manipulation by grinding and cutting may be performed before and after these steps.

(Hot Working S3)

The semi-finished product having been subjected to blooming or hot forging, or the ingot, the slab, the billet, or the bloom is subjected to hot working to obtain a hot working material. The hot working temperature and the hot working rate are not particularly limited. On the other hand, by suitably controlling the cooling rate after the hot working, it is possible to obtain a state in which the titanium material has fewer compound particles including titanium and carbon in the intermediate stage in manufacturing thereof. Through the state in which fewer compound particles including titanium and carbon are formed in the intermediate stage in manufacturing thereof, the final product easily includes more compound particles including titanium and carbon, which is preferable. Specifically, in order to achieve this state, the cooling rate of the hot working material after the hot working is 0.1 °C/s or slower.

(Intermediate Annealing S4)

It is also possible to achieve the state in which fewer compound particles including titanium and carbon are formed in the intermediate stage in manufacturing thereof by subjecting the hot working material after the hot working to intermediate annealing, instead of limiting the cooling rate after the hot working. When the intermediate annealing is performed after the hot working, the intermediate annealing is performed in the range of 600°C to 850°C. The intermediate annealing may be performed where the average temperature rising rate, holding time, and cooling rate are set to general conditions in the annealing after the hot working. On the other hand, holding may be performed at a holding temperature in a range of 600°C to 850°C for a holding time of 10 s or longer. The average temperature rising rate may be 0.1 °C/s or faster and 100 °C/s or slower, and the cooling rate may be 1 °C/s or faster and 100 °C/s or slower. In particular, for more formation amount of $Ti_3C_2$, it is effective that the holding time is 50 s or longer in the intermediate annealing after the hot working. The average temperature rising rate in the intermediate annealing is a value obtained when the difference between the room temperature and the holding temperature is divided by the time required for heating from the room temperature to the holding temperature.

(Cold Working S5)

Next, the hot working material or the hot working material having been subjected to intermediate annealing is subjected to cold working to obtain a cold working material having a finally necessary shape. In the cold working, the cold working degree is 10% or more. The technical significance of the cold working degree will be described later.
The "cold working degree" is a working degree calculated based on the change rate of the dimension of the titanium material after the cold working and the final heat treatment with respect to the dimension of the hot working material or the hot working material having been subjected to the intermediate annealing. That is, the cold working degree is the total working degree from the end of the hot working S3 or the end of the intermediate annealing S4 after the hot working to the end of the additional annealing S6 described later. The cold working for the purpose of shape correction and the like after the additional annealing S6 is completed is not included in the working degree of cold working.

(Additional Annealing S6)

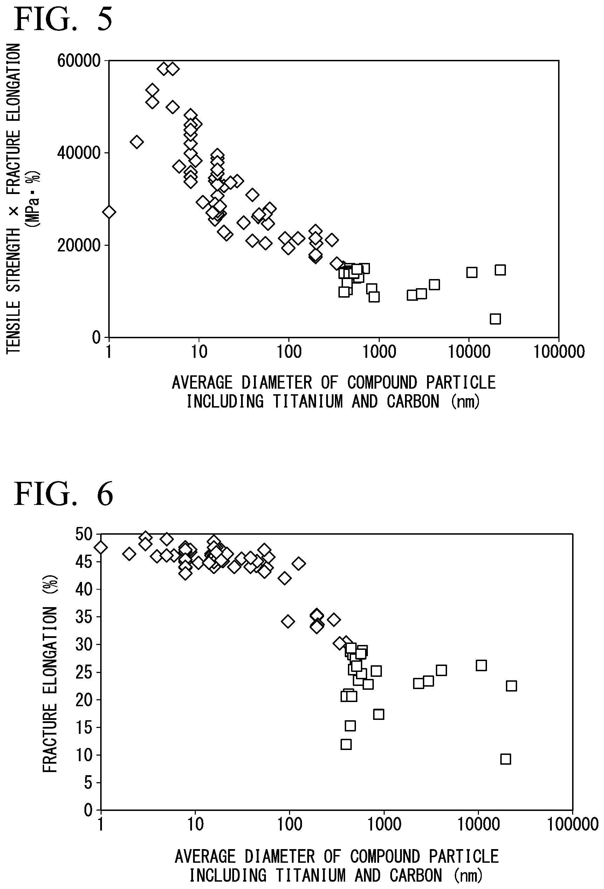

The cold working material is subjected to additional annealing with a thermal profile having any of the four patterns A, B, C1, and C2 shown in FIG. 5, for example. The pattern A includes a heat treatment II performed at a high temperature. The patterns B, C1, and C2 include a heat treatment I performed at a low temperature and a heat treatment II performed at a high temperature. As a result, a titanium material satisfying the above-described metallographic structure is obtained. First, the heat treatment I and the heat treatment II will be described, and then the patterns A, B, C1, and C2 obtained by combining these will be described. However, the heat treatment pattern shown below is merely a preferred example of the manufacturing method of a titanium material according to the present embodiment. Even a titanium material obtained by a method other than the heat treatment pattern shown below is regarded as the titanium material according to the present embodiment as long as it satisfies the above-described requirements.

<Heat Treatment I>

In the heat treatment I, the stay time or the holding time at 200°C to 590°C is increased to form the compound particle including titanium and carbon with an average diameter of 400 nm or shorter.

<Heat Treatment II>

In the heat treatment II, additional annealing is performed in a temperature range of 600°C to 850°C. The cooling rate after the heat treatment II is not particularly limited. The cooling rate after the heat treatment II may be 0.001 °C/s or faster. The cooling rate is more preferably 0.005 °C/s or faster and 100 °C/s or slower.

When the heat treatment I is performed, the average temperature rising rate before the heat treatment 11 is not limited. However, when the heat treatment I is not performed, that is, when the heat treatment of the pattern A is performed as described above, the average temperature rising rate is preferably 1 °C/s or slower at least at 200°C to 590°C, which corresponds to the heat treatment I. The average temperature rising rate at 200°C to 590°C is more preferably 0.001 °C/s or faster and 0.800 °C/s or slower. The average temperature rising rate in the pattern A is a value obtained when the difference between 200°C and 590°C is divided by the time required for heating from 200°C to 590°C. When the holding temperature is lower than 590°C, the average temperature rising rate is a value obtained when the difference between 200°C and the holding temperature is divided by the time required for heating from 200°C to the holding temperature.

The main points of these thermal profiles are:

(1) adjusting the average temperature rising rate in the pattern A or holding a relatively low temperature in the heat treatment I in the patterns B and C to form $Ti_2C$ or $Ti_3C_2$; and
(2) recrystallizing $\alpha$ in the subsequent heat treatment II. As for $Ti_2C$ and $Ti_3C_2$ once formed in the present embodiment, transformation from $Ti_2C$ to TiC or from $Ti_3C_2$ to TiC proceeds at a low rate, and $Ti_2C$ or $Ti_3C_2$ is not completely transformed to TiC in the heat treatment II.

In the heat treatment I and the heat treatment II, the average temperature rising rate and the holding time differ depending on the adopted thermal history pattern. Each condition will be described below.

<<Pattern A>>

The pattern A is a thermal profile in which the heat treatment I is omitted, and instead, the average temperature rising rate is low before the holding temperature in the heat treatment II is reached. The average temperature rising rate in the pattern A is a value obtained when the difference between 200°C and 590°C is divided by the time required for heating from 200°C to 590°C.

When heat treatment is performed in the pattern A after the cold working, the heat treatment II (holding lower limit temperature: 600°C, holding upper limit temperature: 850°C) is performed such that the average temperature rising rate is 1 °C/s or slower at 200°C to 590°C and the holding time is 10 s or longer. More preferably, the holding time of the heat treatment II is 30 s or longer in the pattern A.

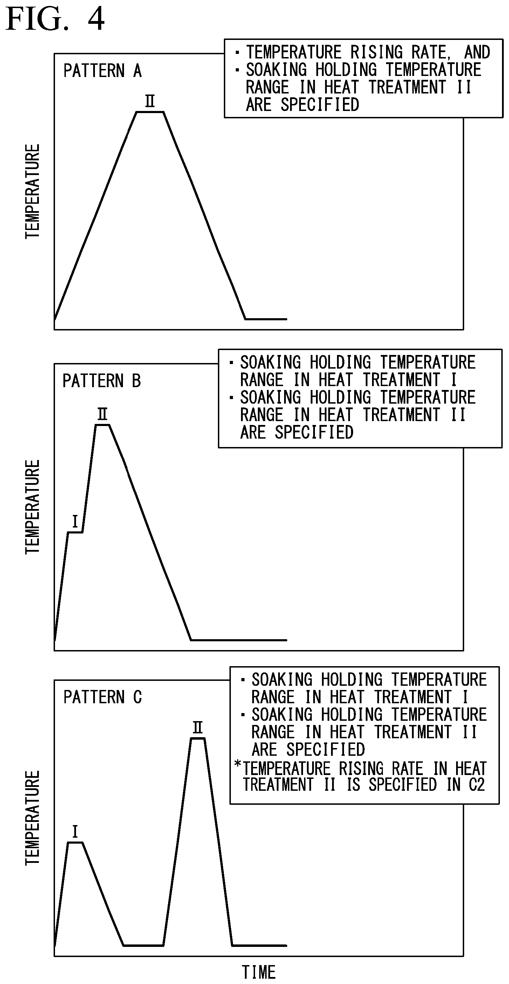

The upper part of FIG. 4 shows an example of a heat treatment pattern according to the pattern A. In the pattern A, the heat treatment I is omitted. In the heat treatment II, the average temperature rising rate is so slow that the stay time at 200°C to 590°C is lengthened. Thus, the compound particle including titanium and carbon and having an average diameter of 400 nm or shorter is formed, and the index of the proportion of TiC and $Ti_2C$ is 0.10 or more in the compound particle including titanium and carbon, which is the main point of the heat treatment in the pattern A. In the heat treatment II of the pattern A, the achieving temperature after heating is 600°C to 850°C. Holding at this temperature makes it possible to obtain a metallographic structure including a grain made of the $\alpha$ phase (hereinafter, $\alpha$ grain) and a compound particle including titanium and carbon and formed with an average diameter of 400 nm or shorter and having an A value of 0.10 or more.

In the pattern A, when the average temperature rising rate is too high at 200°C to 590°C before reaching the holding temperature of the heat treatment II, the stay time at the temperature range is shortened so that $Ti_2C$ or $Ti_3C_2$ is not sufficiently formed, and the A value is not satisfied. In addition, when the average temperature rising rate is too high at 200°C to 590°C before reaching the holding temperature of the heat treatment II, TiC is formed and grown in a stage where $Ti_2C$ or $Ti_3C_2$ is not formed, and the average diameter of the compound particle including titanium and carbon increases.

In the pattern A, when the holding time of the heat treatment II is too short, the $\alpha$ is insufficiently recrystallized. Therefore, before the holding temperature of the heat treatment II is reached, the average temperature rising rate at 200°C to 590°C is as slow as 1 °C/s or slower, and the holding time of the heat treatment II is 10 s or longer.

In the pattern A, in the cold working performed before the additional annealing, the working rate is 10% or more. The working rate is more preferably 15% or more. As a result, it is expected that the number of $Ti_2C$ and $Ti_3C_2$ particles is

increased during the heat treatment.

<<Pattern B>>

The pattern B is a thermal profile in which the heat treatment I and the heat treatment II are continuously performed. When heat treatment is performed in the pattern B after the cold working, the heat treatment I (holding lower limit temperature: 200°C, holding upper limit temperature: 590°C) is performed such that the holding time is 100 s or longer, and the heat treatment II (holding lower limit temperature: 600°C, holding upper limit temperature: 850°C) is performed such that the holding time is 10 s or longer.

The middle part of FIG. 4 shows an example of a thermal profile of the pattern B, in which two-stage heat treatment is performed. In the first stage heat treatment (heat treatment I) of the pattern B, holding is performed in a temperature range of 200°C to 590°C. Thus, the compound particle including titanium and carbon and having an average diameter of 400 nm or shorter is formed, and the index of the proportion of TiC and $Ti_2C$ is 0.10 or more in the compound particle including titanium and carbon.

Thereafter, the second stage heat treatment (heat treatment II) is continuously performed. In the heat treatment II in the pattern B, holding is performed in a temperature range of 600°C to 850°C to eliminate strain and non-recrystallized grains remaining after the heat treatment 1.

Such a two-stage heat treatment makes it possible to obtain a metallographic structure including an $\alpha$ grain and a compound particle including titanium and carbon and having an average diameter of 400 nm or shorter and having an A value of 0.10 or more.

When the holding time is too short in the heat treatment I of the pattern B, $Ti_2C$ and $Ti_3C_2$ are not sufficiently formed. The holding time in the heat treatment I is preferably 300 s or longer, and more preferably 1000 s or longer. The holding time of the heat treatment II is 1 s or longer in the pattern B. The retention time is preferably 30 s or longer, and more preferably 1000 s or longer.

<<Pattern C1, Pattern C2>>

When heat treatment is performed in the pattern C after the cold working, the titanium alloy of the present embodiment can be manufactured according to the exemplified two kinds of manufacturing condition ranges. These two types of patterns are subdivided into the pattern C1 and the pattern C2. Both patterns are similar to the pattern B in that both the heat treatment I and the heat treatment II are performed. However, unlike the pattern B, in which the temperature is raised again after the heat treatment I is finished, in the patterns C1 and C2, the titanium material is once cooled after the heat treatment I is finished, and the temperature is raised again.

The lower part of FIG. 4 exemplifies the pattern C (that is, patterns C1 and C2). Unlike the pattern B, cooling is performed after the first stage heat treatment (heat treatment I), and then, the second stage heat treatment (heat treatment II) is performed. Between the heat treatment I and the heat treatment II, working such as cold rolling may be performed in addition to the cooling. In the pattern C1, the holding temperature of the heat treatment I is in a range of 200°C to 590°C, and the holding temperature of the heat treatment II is in a range of 600°C to 850°C. In the pattern C2, the holding temperature of the heat treatment II is in a range of 600°C to 850°C, and the temperature range of the heat treatment I is not particularly limited. Similarly to the pattern B, the heat treatment of the pattern C makes it possible that the compound particle including titanium and carbon and having an average diameter of 400 nm or shorter is formed, and the index of the proportion of TiC and $Ti_2C$ is 0.10 or more in the compound particle including titanium and carbon.

Depending on the treatment performed between the heat treatment I and the heat treatment II, the compound particle including titanium and carbon can have a smaller average diameter than in the patterns A and B, and the index of the proportion of TiC and $Ti_2C$ can be increased in the compound particle including titanium and carbon. $Ti_3C_2$ can be formed by any of the heat treatment patterns A to C. In order to form more $Ti_3C_2$, it is effective that heat treatment with the pattern C is performed, and cold working is performed immediately before the final heat treatment.

For example, when one set of the pattern C is performed, the heat treatment II is the final heat treatment. Therefore, it is effective to perform cold working between the heat treatment I and the heat treatment II. When the cold working degree before the final heat treatment is too large, the formation of a compound particle including titanium and carbon other than $Ti_3C_2$ is promoted. Therefore, the cold working degree before the final heat treatment is preferably 70% or less.

When heat treatment is performed in the pattern C1, the heat treatment I (holding lower limit temperature: 200°C, holding upper limit temperature: 590°C) is performed such that the holding time is 100 s or longer, and the heat treatment II (holding lower limit temperature: 600°C, holding upper limit temperature: 850°C) is performed such that the holding time is 10 s or longer. When heat treatment is performed in the pattern C1, it is not necessary to limit the average temperature rising rate before the holding temperature of the heat treatment I is reached or the average temperature rising rate before the holding temperature of the heat treatment II is reached.

When heat treatment is performed in the pattern C2, the holding time of the heat treatment I is 30 s or longer, the average temperature rising rate at 200°C to 590°C (at 200°C to the holding temperature when the holding temperature is lower than 590°C) before the holding temperature of the heat treatment II is reached is 1°C/s or slower, and the holding time of the heat treatment II is 10 s or longer. When heat treatment is performed in the pattern C2, it is not necessary to limit the average temperature rising rate before the holding temperature of the heat treatment I is reached.

As an example, regarding the production equipment for carrying out the manufacturing method of a titanium material according to the present embodiment, the patterns A and B are methods using a batch annealing furnace, and the pattern C (both C1 and C2) is a method using a continuous annealing furnace for one or more heat treatments. In C1, both the heat treatment I and the heat treatment II use continuous annealing. In C2, only the heat treatment I uses a continuous annealing furnace, and the heat treatment II uses a batch annealing furnace. In the pattern C1, cooling or cold rolling are not essential after the heat treatment I (before the heat treatment II). In either the pattern C1 or the pattern C2, cold rolling is optionally performed after the heat treatment I (before the heat treatment II).

The pattern C1 differs from the pattern C2 in the holding time of the heat treatment I and the average temperature rising rate before the holding temperature of the heat treatment II is reached.

In the pattern C1, the holding time of the heat treatment I is longer than that in the pattern C2. On the other hand, in the pattern C1, there is no restriction on the average temperature rising rate of the heat treatment II. The pattern C1 is performed under the conditions where holding of the heat treatment I and heating before the holding temperature of the heat treatment II is reached are both utilized to form $Ti_2C$, and the holding time of the heat treatment I can be shortened. Therefore, the holding time of the heat treatment I may be 30 s or longer. That is, according to the pattern C1, the time required for manufacturing a titanium material can be shortened.

In the pattern C2, the holding time of the heat treatment I is shorter than that in the pattern C1. In the pattern C2, the average temperature rising rate before the holding temperature of the heat treatment II is reached is maintained at 1 °C/s or slower. The pattern C2 is performed under the conditions where $Ti_2C$ and $Ti_3C_2$ are formed even in the temperature raising process of the heat treatment II in addition to the formation of $Ti_2C$ and $Ti_3C_2$ in the holding of the heat treatment I. Therefore, the time of the heat treatment I of the pattern C2 may be shorter than that of the pattern C1.

When heat treatment is performed in two steps like the patterns B and C, a set of the heat treatment I and the heat treatment II may be repeated two or more times.

In any of the patterns A, B, and C, the cooling rate after the heat treatment I and the heat treatment II is not limited, and the atmosphere of the heat treatment is not limited. For example, annealing may be performed in an atmosphere such as air, Ar, $N_2$, or a mixed gas of $N_2$ and $H_2$.

After the additional annealing of the patterns A, B, and C is performed, the titanium material may be subjected to descaling or shape correction by a tension leveler or the like as necessary. However, as described above, the working rate in the cold working after completion of the additional annealing is not included in the cold working rate in the cold working step described above.

According to the method described above, the titanium material according to the present embodiment, in which the average diameter of the compound particle including titanium and carbon is controlled to 400 nm or shorter, can have improved ductility, workability, balance in strength and ductility, corrosion resistance, local corrosion resistance, and stress corrosion cracking resistance.

(4. Chemical Device Component and Chemical Device of Present Embodiment)

The chemical device component and the chemical device of an embodiment of the present invention will be described.

The present inventors have found that the titanium material according to the present embodiment, achieving low interface contact resistance, low hydrogen overvoltage, and low oxygen overvoltage, has excellent energy efficiency when used as the constituent material of the chemical device component and the chemical device. Therefore, the chemical device component of the present embodiment includes the titanium material according to the present embodiment. The chemical device of the present embodiment includes the chemical device component of the present embodiment. However, as a matter of course, it is not necessary that the chemical device component and the chemical device are manufactured entirely from the titanium material having the above-described features.

Hereinafter, the chemical device component will be described with reference to a bipolar plate, a gas diffusion layer, and an electrode, and the chemical device will be described with reference to a PEM (proton exchange membrane) electrolytic bath. However, the following description does not limit the use of the titanium material according to the present embodiment or the use of the chemical device component of the present embodiment. In addition, the following description does not limit the chemical device of the present embodiment to a specific chemical device.

The PEM electrolytic bath is a chemical device to generate hydrogen gas at the cathode and oxygen gas at the anode.

The bipolar plate is a component that is called separator, and separates the electrolyte in the electrolytic bath. The bipolar plate also has a role of forming a flow path for generated hydrogen gas and oxygen gas. The bipolar plate is required to have low interface contact resistance in addition to high sulfuric acid corrosion resistance. The gas diffusion layer is a member to efficiently separate generated hydrogen gas and oxygen gas from the electrode, and is required to have low interface contact resistance in addition to high sulfuric acid corrosion resistance. The member from which hydrogen gas and oxygen gas are generated is called electrode or current collector, and is required to have low interface contact resistance, low hydrogen overvoltage, and low oxygen overvoltage, in addition to high sulfuric acid corrosion resistance.

In order that the bipolar plate, the gas diffusion layer, and the electrode exhibit these characteristics, a coating containing Pt or Ir has been conventionally used. On the other hand, when the titanium material according to the present embodiment is used as the constituent material of the bipolar plate, the gas diffusion layer, and the electrode, low interface contact resistance, low hydrogen overvoltage, and low oxygen overvoltage can be achieved without a coating containing Pt or Ir.

The bipolar plate is formed into a shape suitable for forming a flow path for hydrogen gas and oxygen gas. In the chemical device component according to the present embodiment, the forming method is not limited. For example, the bipolar plate can be formed by mechanical pressing, hydroforming, or the like.

Since the gas diffusion layer needs to efficiently diffuse the generated gas, a pore or a space having the same role is required. The method for forming the pore or the space is not limited in the chemical device component according to the present embodiment. For example, the gas diffusion layer can be formed by a method in which the titanium material is formed into a mesh shape by lathe processing or laser processing and these materials are combined, or a method in which the titanium material is formed into a fiber shape by a coil cutting method or the like and the titanium fiber is sintered to form a porous body.

When the titanium fiber is sintered to form a porous body, as the treatment to form the sintered body, any of the patterns A, B, and C described in the preferred manufacturing method of the titanium material according to the present embodiment may be performed for the treatment. Thereby, a porous body can be formed from the titanium material that has the compound particle including titanium and carbon according to the present embodiment.

Similarly to the gas diffusion layer, the electrode can be produced, for example, by forming the titanium material into a mesh shape by lathe processing or laser processing. In addition, the electrode may be combined with an ion exchange membrane to form a MEA (membrane electrode assembly) or a zero gap electrode.

Examples

Hereinafter, the present invention will be described more specifically with reference to examples. The present invention is not limited by the following examples, and can be implemented with appropriate modifications within the scope conforming to the gist of the present invention, and such modifications are also included in the technical scope of the present invention.

A melting raw material including sponge titanium, scrap, and predetermined additive elements was subjected to electron beam melting to cast a titanium ingot having a chemical composition shown in Tables 4A, 4B, 4C, and 4D. The content of the element not intentionally added to the titanium ingot is indicated by the symbol "-" in Table 1.

[Table 4A]

| Material | C | H | O | N | Fe | S | P | Si | Al | V |
|---|---|---|---|---|---|---|---|---|---|---|
| <u>A</u> | <u>0.004</u> | - | 0.041 | 0.003 | 0.030 | 0.0100 | 0.0002 | 0.001 | - | - |
| B | 0.102 | 0.005 | 0.060 | 0.023 | 0.036 | 0.0070 | - | 0.005 | - | - |
| C | 0.230 | 0.005 | 0.057 | 0.011 | 0.039 | 0.0040 | 0.0147 | 0.008 | 0.45 | - |
| D | 0.290 | 0.004 | 0.043 | 0.024 | 0.041 | 0.0020 | 0.0004 | - | - | - |
| <u>E</u> | <u>0.330</u> | 0.006 | 0.031 | 0.018 | 0.023 | 0.0090 | 0.0037 | 0.003 | - | - |
| <u>F</u> | 0.230 | 0.005 | 0.055 | 0.017 | <u>0.616</u> | 0.0080 | 0.0010 | 0.009 | - | |
| <u>G</u> | 0.140 | 0.005 | 0.057 | 0.011 | 0.070 | <u>0.0422</u> | 0.0205 | 0.010 | - | - |
| <u>H</u> | 0.150 | 0.005 | 0.057 | 0.011 | 0.090 | 0.0030 | <u>0.0405</u> | 0.011 | - | |
| <u>I</u> | 0.110 | 0.005 | 0.057 | 0.011 | 0.039 | 0.0100 | 0.0278 | <u>0.110</u> | - | - |
| J | 0.150 | 0.003 | 0.055 | 0.012 | 0.080 | 0.0200 | 0.0147 | 0.001 | - | - |
| K | 0.210 | 0.007 | 0.051 | 0.009 | 0.280 | - | 0.0246 | 0.015 | - | |
| L | 0.230 | 0.005 | 0.049 | 0.013 | 0.050 | 0.0001 | 0.0118 | 0.090 | 0.02 | - |

(continued)

| Material | C | H | O | N | Fe | S | P | Si | Al | V |
|---|---|---|---|---|---|---|---|---|---|---|
| M | 0.210 | 0.008 | 0.120 | 0.012 | 0.090 | 0.0027 | 0.0001 | 0.011 | - | 0.02 |
| N | 0.240 | 0.006 | 0.220 | 0.013 | 0.040 | 0.0100 | 0.0118 | 0.014 | - | 0.44 |
| O | 0.220 | 0.005 | 0.270 | 0.011 | 0.080 | 0.0100 | 0.0177 | 0.013 | - | - |
| P | 0.230 | 0.005 | 0.057 | 0.011 | 0.039 | 0.0040 | 0.0063 | 0.008 | - | - |
| Q | 0.230 | 0.005 | 0.057 | 0.011 | 0.039 | 0.0040 | 0.0042 | 0.008 | - | - |
| R | 0.230 | 0.005 | 0.057 | 0.011 | 0.039 | 0.0040 | 0.0103 | 0.008 | - | - |
| S | 0.230 | 0.005 | 0.057 | - | 0.039 | 0.0040 | 0.0097 | 0.008 | - | - |
| T | 0.230 | 0.005 | 0.057 | 0.011 | 0.039 | 0.0040 | 0.0011 | 0.008 | - | - |
| U | 0.230 | 0.005 | 0.057 | 0.011 | - | 0.0040 | 0.0019 | 0.008 | - | - |
| V | 0.230 | 0.005 | 0.057 | 0.011 | 0.039 | 0.0040 | 0.0004 | 0.008 | - | - |
| W | 0.230 | 0.005 | 0.057 | 0.011 | 0.039 | 0.0040 | 0.0142 | 0.008 | - | - |
| X | 0.230 | 0.005 | 0.057 | 0.011 | 0.039 | 0.0040 | 0.0009 | 0.008 | - | - |
| Y | 0.230 | 0.005 | 0.057 | 0.011 | 0.039 | 0.0006 | 0.0086 | 0.008 | - | - |
| Z | 0.197 | 0.014 | - | - | 0.001 | - | - | - | - | - |
| Z2 | 0.247 | - | - | - | - | - | - | - | - | - |

[Table 4B]

| Material | Ru | Pd | Ni | Co | Mn | Cu | Cr | Sn | Zr | Mn + Cu + Cr + Sn + Zr |
|---|---|---|---|---|---|---|---|---|---|---|
| A | - | - | - | - | - | - | - | - | - | - |
| B | - | - | - | - | - | - | - | - | - | - |
| C | - | - | - | - | - | - | - | - | - | - |
| D | - | - | - | - | - | - | - | - | - | - |
| E | - | - | - | - | - | - | - | - | - | - |
| F | | | | | | | | | | |
| G | | | | | | | | | | |
| H | - | - | - | - | - | - | - | - | - | - |
| I | | | | | | | | | | |
| J | - | - | - | 0.02 | - | - | - | - | - | - |
| K | 0.003 | - | - | - | - | - | - | - | - | - |
| L | - | - | - | - | - | - | - | - | - | - |
| M | - | - | - | - | - | - | - | - | - | - |
| N | - | - | 0.02 | - | - | - | - | - | - | - |
| O | - | - | <0.01 | - | - | - | - | - | - | - |
| P | - | - | <0.01 | - | 0.02 | - | - | - | - | 0.02 |
| Q | - | - | <0.01 | - | - | 0.03 | - | - | - | 0.03 |
| R | - | - | <0.01 | - | - | - | 0.05 | - | - | 0.05 |
| S | - | - | <0.01 | - | - | - | - | 0.04 | - | 0.04 |
| T | - | - | <0.01 | - | - | - | - | - | 0.01 | 0.01 |
| U | - | - | <0.01 | - | 0.01 | - | - | 0.01 | - | 0.02 |

(continued)

| Material | Ru | Pd | Ni | Co | Mn | Cu | Cr | Sn | Zr | Mn + Cu + Cr + Sn + Zr |
|---|---|---|---|---|---|---|---|---|---|---|
| V | - | - | <0.01 | - | 0.03 | - | - | 0.04 | 0.02 | 0.09 |
| W | - | - | <0.01 | - | 0.02 | 0.01 | - | 0.05 | 0.03 | 0.11 |
| X | - | - | <0.01 | - | 0.02 | 0.01 | 0.01 | 0.06 | 0.02 | 0.12 |
| Y | - | - | <0.01 | - | 0.02 | 0.15 | 0.01 | 0.02 | 0.02 | 0.22 |
| Z | - | 0.007 | - | - | - | - | - | - | - | - |
| Z2 | - | - | - | - | - | - | - | - | - | - |

[Table 4C]

| Material | B | Ca | Sc | Zn | Ga | Ge | Y | Nb | Mo | Ag | Cd | In | Sb |
|---|---|---|---|---|---|---|---|---|---|---|---|---|---|
| A | 0.150 | 0.132 | 0.071 | 0.059 | 0.008 | 0.030 | 0.023 | 0.115 | 0.154 | 0.064 | 0.184 | 0.074 | 0.056 |
| B | - | - | - | - | - | - | - | - | - | - | - | - | - |
| C | - | - | - | - | - | - | - | - | - | - | - | - | - |
| D | - | 0.065 | 0.083 | 0.200 | 0.124 | 0.150 | 0.125 | 0.059 | 0.160 | 0.092 | 0.191 | 0.062 | 0.094 |
| E | 0.213 | 0.199 | 0.046 | 0.199 | 0.117 | 0.162 | 0.224 | 0.082 | 0.001 | 0.026 | 0.067 | 0.079 | 0.047 |
| F | 0.048 | 0.156 | 0.072 | - | 0.186 | 0.134 | 0.125 | 0.118 | 0.237 | 0.052 | 0.004 | 0.073 | 0.080 |
| G | 0.192 | 0.059 | 0.072 | 0.230 | 0.153 | 0.161 | 0.195 | 0.007 | 0.144 | 0.098 | 0.111 | 0.095 | 0.023 |
| H | 0.101 | 0.053 | 0.085 | 0.218 | 0.051 | 0.137 | 0.261 | 0.045 | 0.185 | 0.098 | 0.038 | 0.005 | 0.012 |
| I | 0.159 | 0.027 | 0.072 | 0.084 | 0.159 | 0.120 | 0.082 | 0.076 | 0.090 | 0.027 | 0.179 | 0.014 | 0.042 |
| J | 0.289 | 0.119 | 0.015 | 0.047 | 0.119 | 0.137 | - | 0.038 | 0.012 | 0.037 | - | 0.100 | 0.079 |
| K | 0.062 | 0.128 | 0.042 | 0.209 | 0.072 | 0.125 | 0.134 | 0.036 | 0.062 | 0.009 | 0.114 | 0.003 | 0.037 |
| L | 0.076 | 0.186 | 0.084 | 0.038 | 0.017 | 0.034 | 0.036 | 0.064 | 0.186 | 0.061 | 0.107 | 0.071 | 0.003 |
| M | 0.188 | 0.084 | - | - | 0.062 | 0.071 | 0.114 | 0.006 | 0.025 | 0.038 | 0.120 | 0.054 | 0.052 |
| N | - | 0.076 | 0.091 | 0.238 | 0.049 | 0.185 | 0.042 | 0.112 | 0.098 | 0.071 | 0.051 | 0.086 | 0.051 |
| O | 0.219 | 0.023 | 0.059 | 0.291 | 0.054 | 0.104 | 0.166 | 0.024 | - | 0.082 | 0.070 | - | 0.003 |
| P | 0.271 | 0.032 | 0.008 | 0.066 | 0.183 | 0.050 | 0.031 | - | 0.219 | 0.092 | 0.118 | 0.071 | 0.092 |
| Q | 0.193 | 0.194 | 0.096 | 0.055 | 0.079 | 0.056 | 0.145 | 0.142 | 0.243 | 0.066 | 0.080 | 0.050 | - |
| R | 0.104 | - | 0.083 | 0.224 | 0.041 | 0.084 | 0.189 | 0.074 | - | 0.016 | 0.033 | 0.047 | 0.028 |
| S | 0.294 | 0.182 | 0.085 | 0.031 | 0.106 | 0.039 | 0.007 | 0.118 | 0.070 | 0.051 | 0.195 | 0.039 | 0.050 |
| T | 0.200 | 0.017 | 0.062 | 0.170 | 0.158 | - | 0.066 | 0.080 | 0.244 | 0.010 | 0.092 | 0.097 | 0.097 |
| U | 0.156 | 0.059 | 0.080 | 0.123 | - | 0.050 | 0.052 | 0.146 | 0.108 | - | 0.024 | 0.068 | 0.041 |
| V | 0.196 | 0.178 | 0.060 | 0.047 | 0.106 | 0.110 | 0.065 | 0.094 | 0.007 | 0.005 | 0.055 | 0.007 | 0.096 |
| W | 0.148 | 0.164 | 0.055 | 0.034 | 0.167 | 0.081 | 0.170 | 0.140 | 0.019 | 0.032 | 0.027 | 0.051 | 0.054 |
| X | 0.007 | 0.171 | 0.083 | 0.006 | 0.113 | 0.124 | 0.192 | 0.020 | 0.101 | 0.009 | 0.017 | 0.078 | 0.088 |
| Y | 0.160 | 0.183 | 0.085 | 0.099 | 0.042 | 0.187 | - | 0.015 | 0.181 | 0.078 | 0.074 | 0.024 | 0.084 |
| Z | 0.018 | 0.187 | 0.076 | 0.230 | 0.038 | 0.141 | 0.210 | - | 0.072 | 0.083 | 0.032 | 0.099 | 0.035 |
| Z2 | - | - | - | - | - | - | - | - | - | - | - | - | - |

[Table 4D]

| Material | Bi | Hf | Ta | w | Re | Au | Pt | Ir | Rh | Os | Pt + Pd + Ru + Ir + Rh + Os |
|---|---|---|---|---|---|---|---|---|---|---|---|
| A | 0.051 | 0.224 | 0.062 | 0.032 | 0.248 | 0.045 | - | - | - | - | - |
| B | - | - | - | - | - | - | - | - | - | - | - |
| C | - | - | - | - | - | - | - | - | - | - | - |
| D | 0.063 | 0.173 | 0.143 | 0.377 | 0.291 | - | - | - | - | - | - |
| E | 0.134 | 0.208 | 0.295 | 0.141 | 0.194 | 0.070 | - | - | - | - | - |
| F | 0.127 | 0.153 | 0.193 | 0.589 | 0.124 | 0.030 | - | - | - | - | - |
| G | 0.104 | 0.195 | 0.138 | 0.433 | 0.157 | 0.074 | - | - | - | - | - |
| H | 0.075 | 0.292 | 0.014 | 0.145 | 0.176 | 0.058 | - | - | - | - | - |
| I | 0.038 | 0.171 | 0.106 | 0.578 | 0.098 | 0.059 | - | - | - | - | - |
| J | 0.026 | 0.022 | 0.035 | 0.074 | 0.288 | 0.063 | - | - | - | - | - |
| K | 0.116 | 0.125 | 0.227 | 0.165 | 0.111 | 0.032 | 0.013 | - | - | - | 0.016 |
| L | 0.005 | - | 0.187 | 0.227 | 0.170 | 0.053 | 0.027 | - | - | - | 0.027 |
| M | 0.137 | 0.083 | 0.045 | 0.337 | 0.209 | 0.032 | 0.081 | - | - | - | 0.081 |
| N | 0.133 | 0.260 | 0.127 | 0.419 | 0.281 | 0.082 | 0.046 | - | - | - | 0.046 |
| O | 0.079 | 0.124 | 0.224 | 0.365 | 0.022 | 0.049 | - | 0.005 | - | - | 0.005 |
| P | 0.161 | 0.137 | 0.178 | 0.139 | 0.095 | 0.060 | - | 0.008 | - | - | 0.008 |
| Q | 0.011 | 0.241 | 0.227 | 0.033 | 0.105 | 0.040 | - | 0.028 | - | - | 0.028 |
| R | 0.061 | - | 0.251 | 0.359 | 0.066 | 0.085 | 0.004 | - | - | - | 0.004 |
| S | 0.004 | 0.279 | 0.185 | 0.133 | 0.033 | 0.090 | - | - | 0.002 | - | 0.002 |
| T | 0.090 | 0.007 | 0.049 | 0.440 | 0.005 | - | 0.147 | - | - | - | 0.147 |
| U | - | 0.146 | 0.226 | 0.300 | 0.212 | 0.073 | 0.082 | - | - | - | 0.082 |
| V | 0.038 | 0.233 | 0.074 | 0.008 | - | 0.097 | - | - | 0.009 | - | 0.009 |
| W | 0.104 | 0.066 | 0.149 | 0.241 | 0.169 | 0.060 | - | - | 0.025 | - | 0.025 |
| X | 0.031 | 0.042 | - | 0.331 | 0.173 | 0.054 | - | - | - | 0.077 | 0.077 |
| Y | 0.018 | 0.069 | 0.194 | 0.490 | 0.233 | 0.090 | - | - | - | 0.005 | 0.005 |
| Z | 0.078 | 0.130 | 0.153 | - | 0.167 | 0.072 | - | - | - | 0.109 | 0.116 |
| Z2 | - | - | - | - | - | - | - | - | - | - | - |

The cast titanium ingot was heated at a heating temperature of 750°C or higher and 1000°C or lower, and then subjected to forging and hot rolling to obtain a hot band having a thickness of 5.0 mm. The hot band was descaled, and then subjected to intermediate sheet annealing (hot-band annealing), cold rolling, and additional annealing under the conditions shown in Tables 5A, 5B, and 5C. The additional annealing was performed in an Ar atmosphere. The manufacturing conditions not disclosed in the table were as follows.

· Cooling temperature control after hot rolling: none
· Average temperature rising rate from room temperature to the holding temperature of intermediate annealing (hot-band annealing): 0.1 °C/s or faster and 100 °C/s or slower
· Holding time in intermediate annealing (hot-band annealing): 10 s or longer
· Cooling rate after the end of holding in intermediate annealing (hot-band annealing): 0.1 °C/s or faster and 50 °C/s or slower

[Table 5A]

| No. | Material | Hot-band annealing temperature (°C) | Cold working degree (%) | Additional annealing pattern | Heat treatment I Temperature rising rate (°C/s) | Heat treatment I Soaking holding temperature (°C) | Heat treatment I Soaking holding time (s) | Heat treatment II Temperature rising rate (°C/s) | Heat treatment II Soaking holding temperature (°C) | Heat treatment II Soaking holding time (s) | |
|---|---|---|---|---|---|---|---|---|---|---|---|
| 1 | C | 800 | 30 | A | None | None | None | 0.001 | 650 | 30000 | Example of present invention |
| 2 | C | 800 | 30 | A | None | None | None | 0.005 | 650 | 30000 | |
| 3 | C | 800 | 30 | A | None | None | None | 0.010 | 650 | 30000 | |
| 4 | C | 800 | 50 | A | None | None | None | 0.005 | 650 | 30000 | |
| 5 | C | 800 | 70 | A | None | None | None | 0.005 | 650 | 30000 | |
| 6 | C | 800 | 90 | A | None | None | None | 0.005 | 650 | 30000 | |
| 7 | C | 850 | 70 | A | None | None | None | 0.005 | 650 | 30000 | |
| 8 | C | 700 | 70 | A | None | None | None | 0.005 | 650 | 30000 | |
| 9 | C | 600 | 70 | A | None | None | None | 0.005 | 650 | 30000 | |
| 10 | C | 800 | 70 | A | None | None | None | 0.005 | 600 | 30000 | |
| 11 | C | 800 | 70 | A | None | None | None | 0.005 | 700 | 1000 | |
| 12 | C | 800 | 70 | A | None | None | None | 0.005 | 800 | 1000 | |
| 13 | C | 800 | 70 | A | None | None | None | 0.005 | 650 | 1000 | |
| 14 | C | 800 | 70 | A | None | None | None | 0.005 | 700 | 30000 | |
| 15 | C | 800 | 70 | A | None | None | None | 0.005 | 700 | 3000 | |
| 16 | C | 800 | 70 | A | None | None | None | 0.005 | 700 | 30 | |
| 17 | C | 800 | 70 | B | 0.05 | 200 | 3000 | 0.005 | 650 | 30000 | |
| 18 | C | 800 | 70 | B | 0.05 | 300 | 3000 | 0.005 | 650 | 30000 | |
| 19 | C | 800 | 70 | B | 0.05 | 400 | 3000 | 0.005 | 650 | 30000 | |
| 20 | C | 800 | 70 | B | 0.05 | 500 | 3000 | 0.005 | 650 | 30000 | |
| 21 | C | 800 | 70 | B | 0.05 | 400 | 1000 | 0.005 | 650 | 30000 | |
| 22 | C | 800 | 70 | B | 0.05 | 400 | 30000 | 0.005 | 650 | 30000 | |
| 23 | C | 800 | 70 | B | 0.005 | 400 | 30000 | 0.005 | 650 | 30000 | |

27

(continued)

| No. | Material | Hot-band annealing temperature (°C) | Cold working degree (%) | Additional annealing pattern | Heat treatment I Temperature rising rate (°C/s) | Heat treatment I Soaking holding temperature (°C) | Heat treatment I Soaking holding time (s) | Heat treatment II Temperature rising rate (°C/s) | Heat treatment II Soaking holding temperature (°C) | Heat treatment II Soaking holding time (s) |
|---|---|---|---|---|---|---|---|---|---|---|
| 24 | C | 800 | 70 | B | 0.5 | 400 | 30000 | 0.005 | 650 | 30000 |
| 25 | C | 800 | 70 | B | 0.005 | 400 | 30000 | 0.500 | 650 | 30000 |
| 26 | C | 800 | 70 | B | 0.005 | 400 | 30000 | 1.000 | 650 | 30000 |
| 27 | C | 800 | 70 | B | 0.005 | 400 | 30000 | 0.005 | 600 | 30000 |
| 28 | C | 800 | 70 | B | 0.005 | 400 | 30000 | 0.005 | 750 | 30000 |
| 29 | C | 800 | 70 | B | 0.005 | 400 | 30000 | 0.005 | 850 | 30000 |
| 30 | C | 800 | 70 | B | 0.5 | 400 | 30000 | 0.005 | 650 | 30 |
| 31 | C | 800 | 70 | B | 0.5 | 400 | 30000 | 0.005 | 650 | 1000 |

[Table 5B]

| | No. | Material | Hot-band annealing temperature (°C) | Cold working degree (%) | Additional annealing pattern | Heat treatment I Temperature rising rate (°C/s) | Heat treatment I Soaking holding temperature (°C) | Heat treatment I Soaking holding time (s) | Heat treatment II Temperature rising rate (°C/s) | Heat treatment II Soaking holding temperature (°C) | Heat treatment II Soaking holding time (s) |
|---|---|---|---|---|---|---|---|---|---|---|---|
| | 32 | C | 800 | 70 | C1 | 0.5 | 400 | 1000 | 0.005 | 650 | 3000 |
| | 33 | C | 800 | 70 | C1 | 0.5 | 400 | 1000 | 0.005 | 650 | 3000 |
| | 34 | C | 800 | 70 | C1 | 0.5 | 400 | 1000 | 1.000 | 650 | 3000 |
| | 35 | C | 800 | 70 | C2 | 0.5 | 400 | 1000 | 0.010 | 650 | 3000 |
| | 36 | C | 800 | 70 | C2 | 0.5 | 400 | 30 | 0.005 | 650 | 3000 |
| | 37 | C | 800 | 70 | C2 | 0.5 | 400 | 1000 | 0.001 | 650 | 3000 |
| | 38 | C | 800 | 70 | C2 | 0.5 | 400 | 1000 | 0.005 | 650 | 3000 |
| Example of present invention | 39 | B | 800 | 70 | A | None | None | None | 0.001 | 650 | 30000 |
| | 40 | B | 800 | 70 | A | None | None | None | 0.005 | 650 | 30000 |
| | 41 | D | 800 | 70 | A | None | None | None | 0.005 | 650 | 30000 |
| | 42 | J | 800 | 70 | A | None | None | None | 0.005 | 650 | 30000 |
| | 43 | K | 800 | 70 | A | None | None | None | 0.005 | 650 | 30000 |
| | 44 | L | 800 | 70 | A | None | None | None | 0.005 | 650 | 30000 |
| | 45 | M | 800 | 70 | A | None | None | None | 0.005 | 650 | 30000 |
| | 46 | N | 800 | 70 | A | None | None | None | 0.005 | 650 | 30000 |
| | 47 | P | 800 | 70 | A | None | None | None | 0.005 | 650 | 30000 |
| | 48 | Q | 800 | 70 | A | None | None | None | 0.005 | 650 | 30000 |
| | 49 | R | 800 | 70 | A | None | None | None | 0.005 | 650 | 30000 |
| | 50 | S | 800 | 70 | A | None | None | None | 0.005 | 650 | 30000 |

| No. | Material | Hot-band annealing temperature (°C) | Cold working degree (%) | Additional annealing pattern | Heat treatment I Temperature rising rate (°C/s) | Heat treatment I Soaking holding temperature (°C) | Heat treatment I Soaking holding time (s) | Heat treatment II Temperature rising rate (°C/s) | Heat treatment II Soaking holding temperature (°C) | Heat treatment II Soaking holding time (s) |
|---|---|---|---|---|---|---|---|---|---|---|
| 51 | T | 800 | 70 | A | None | None | None | 0.005 | 650 | 30000 |
| 52 | U | 800 | 70 | A | None | None | None | 0.005 | 650 | 30000 |
| 53 | V | 800 | 70 | A | None | None | None | 0.005 | 650 | 30000 |
| 54 | W | 800 | 70 | A | None | None | None | 0.005 | 650 | 30000 |
| 55 | X | 800 | 70 | A | None | None | None | 0.005 | 650 | 30000 |
| 56 | C | 800 | 40 | A | None | None | None | 0.011 | 600 | 40 |
| 57 | C | 800 | 40 | A | None | None | None | 0.011 | 610 | 30 |
| 58 | C | 800 | 40 | A | None | None | None | 0.011 | 600 | 40 |
| 59 | C | 800 | 40 | A | None | None | None | 0.010 | 600 | 40 |
| 60 | C | 800 | 40 | A | None | None | None | 0.010 | 610 | 30 |
| 61 | C | 800 | 40 | A | None | None | None | 0.010 | 600 | 40 |
| 62 | C | 800 | 40 | A | None | None | None | 0.011 | 610 | 40 |
| 63 | Z | 800 | 40 | A | None | None | None | 0.010 | 610 | 90 |
| 64 | Z2 | 800 | 70 | C2 | 80 | 400 | 1000 | 0.001 | 650 | 3000 |

EP 4 617 390 A1

30

In No. 32, 34 to 37, and 64 in Table 5B, cold working was performed between the heat treatment I and the heat treatment II.

[Table 5C]

| | No. | Material | Hot-band annealing temperature (°C) | Cold working degree (%) | Additional annealing pattern | Heat treatment I Temperature rising rate (°C/s) | Heat treatment I Soaking holding temperature (°C) | Heat treatment I Soaking holding time (s) | Heat treatment II Temperature rising rate (°C/s) | Heat treatment II Soaking holding temperature (°C) | Heat treatment II Soaking holding time (s) |
|---|---|---|---|---|---|---|---|---|---|---|---|
| Comparative Example | 65 | C | 800 | 70 | A | None | None | None | <u>110</u> | 650 | 30000 |
| | 66 | C | 800 | 1 | A | None | None | None | 0.005 | 650 | 30000 |
| | 67 | C | 550 | 70 | A | None | None | None | 0.005 | 650 | 30000 |
| | 68 | C | 900 | 70 | A | None | None | None | 0.005 | 650 | 30000 |
| | 69 | C | 800 | 70 | A | None | None | None | 0.005 | <u>550</u> | 30000 |

(continued)

| No. | Material | Hot-band annealing temperature (°C) | Cold working degree (%) | Additional annealing pattern | Heat treatment I Temperature rising rate (°C/s) | Heat treatment I Soaking holding temperature (°C) | Heat treatment I Soaking holding time (s) | Heat treatment II Temperature rising rate (°C/s) | Heat treatment II Soaking holding temperature (°C) | Heat treatment II Soaking holding time (s) |
|---|---|---|---|---|---|---|---|---|---|---|
| 70 | C | 800 | 70 | A | None | None | None | 0.005 | 650 | 5 |
| 71 | C | 800 | 70 | A | None | None | None | 0.005 | 850 | 1 |
| 72 | C | 800 | 70 | B | 0.05 | 150 | 3000 | 130 | 650 | 30000 |
| 73 | C | 800 | 70 | B | 120 | 550 | 3000 | 0.005 | 650 | 30000 |
| 74 | C | 800 | 70 | B | 0.05 | 400 | 80 | 0.005 | 650 | 30000 |
| 75 | C | 800 | 70 | B | 0.05 | 400 | 3000 | 0.005 | 650 | 8 |
| 76 | A | 800 | 70 | A | None | None | None | 0.005 | 650 | 30000 |
| 77 | E | 800 | 70 | A | None | None | None | 0.005 | 650 | 30000 |
| 78 | F | 800 | 70 | A | None | None | None | 0.005 | 650 | 30000 |
| 79 | G | 800 | 70 | A | None | None | None | 0.005 | 650 | 30000 |
| 80 | H | 800 | 70 | A | None | None | None | 0.005 | 650 | 30000 |
| 81 | I | 800 | 70 | A | None | None | None | 0.005 | 650 | 30000 |
| 82 | O | 800 | 70 | A | None | None | None | 0.005 | 650 | 30000 |
| 83 | Y | 800 | 70 | A | None | None | None | 0.005 | 650 | 30000 |
| 84 | N | 800 | 1 | A | None | None | None | 0.005 | 650 | 30000 |
| 85 | N | 800 | 0 | A | None | None | None | 0.004 | 650 | 30000 |
| 86 | C | 800 | 70 | C2 | 70 | 200 | 40 | 90 | 400 | 100 |
| 87 | C | 800 | 70 | B | 0.05 | 400 | 3000 | 0.005 | 580 | 30000 |
| 88 | C | 800 | 70 | C2 | 50 | 750 | 80 | 120 | 500 | 180 |
| 89 | C | 800 | 70 | C1 | 100 | 150 | 200 | 0.012 | 600 | 30000 |
| 90 | C | 800 | 70 | C2 | 120 | 300 | 200 | 120 | 580 | 30000 |

A test piece was prepared from the manufactured titanium material plate, and metallographic structure study, workability, ductility, balance in strength and ductility, corrosion resistance, local corrosion resistance, stress corrosion cracking resistance, interface contact resistance, hydrogen overvoltage, and oxygen overvoltage were studied.

The metallographic structure study is the studies 1 to 5 described below.

    1. Measurement of average diameter of compound particle including titanium and carbon
    2. Measurement of A value
    3. Confirmation of whether $Ti_3C_2$ is present
    4. Measurement of maximum particle diameter
    5. Proportion of integrated intensity of X-ray peak of compound particle including titanium and carbon to integrated intensity of X-ray peak of $\alpha$ phase

Studies 1, 2, and 3 were performed by the methods described above. The methods of studies 4 and 5 will be described below.

The maximum particle diameter of the compound particle including titanium and carbon was measured by observing a cross section of the titanium material with SEM and TEM. The data to be employed varies depending on the size of the maximum diameter of the compound particle including titanium and carbon.

First, the average diameter of the compound particle including titanium and carbon is measured using SEM. When the SEM observation result indicates that the compound particle including titanium and carbon has a maximum diameter of 400 nm or longer, SEM data is adopted. When the average diameter of the compound particle including titanium and carbon obtained using SEM is shorter than 400 nm, TEM measurement is further performed and the TEM data is adopted.

In the SEM observation, first, two observed sections are determined. The two cross sections are: an arbitrary cross section that is parallel to the sheet thickness direction of the titanium material (cross section 1); and a cross section that is parallel to the sheet thickness direction of the titanium material and satisfies perpendicular relationship with the cross section 1 (cross section 2). For example, when the cross section 1 is a L cross section of the titanium material, the cross section 2 is a T cross section of the titanium material. The L cross section is a cross section that is parallel to the rolling direction of the titanium material and perpendicular to the rolled surface, and the T cross section is a cross section that is perpendicular to the rolling direction of the titanium material and perpendicular to the rolled surface.

The cross section 1 and the cross section 2 are mirror-polished. Next, the cross sections are further polished using a colloidal silica-containing liquid as a polishing liquid. The obtained surfaces are observed with SEM. These cross sections are observed with a scanning electron microscope at magnifications of 100 times, 500 times, 1000 times, 3000 times, 5000 times, and 10000 times. Then, the magnification at which an image including 5 or more and 20 or less particles in the observed visual field is obtained is adopted for specifying the maximum particle diameter. When 5 or more and 20 or less particles are included at 2 or more observation magnifications, the observation result at a lower magnification is adopted.

At the employed magnification, five visual fields are observed in the cross section 1, and five visual fields are also observed in the cross section 2. The number of observed visual fields is 10 in total. Then, the maximum particle diameter is calculated in each of the 10 visual fields. When an elliptic particle is observed, the arithmetic mean value of the major axis diameter and the minor axis diameter of the particle is regarded as the diameter of the particle.

Among the calculated 10 maximum particle diameters, the largest numerical value is adopted and regarded as the maximum particle diameter. When the measured value of the maximum particle diameter is 400 nm or longer, data obtained by SEM observation is adopted.

In addition, the particles are subjected to point analysis by EDS provided in the scanning electron microscope. A particle in which both Ti and C are detected is regarded as the compound particle including titanium and carbon.

Also in the TEM observation, first, two observed sections are determined. The two cross sections are: an arbitrary cross section that is parallel to the sheet thickness direction of the titanium material (cross section 1); and a cross section that is parallel to the sheet thickness direction of the titanium material and satisfies perpendicular relationship with the cross section 1 (cross section 2), as described above. A sample is collected from the cross section 1 and the cross section 2 by FIB processing and used for TEM observation. Observation is performed with a scanning electron microscope at magnifications of 1000 times, 5000 times, 20000 times, 50000 times, 100000 times, and 300000 times. Then, the magnification at which an image including 5 or more and 20 or less particles in the observed visual field is obtained is adopted for specifying the maximum particle diameter. When 5 or more and 20 or less particles are included at 2 or more observation magnifications, the observation result at a lower magnification is adopted.

At the employed magnification, five visual fields are observed in the cross section 1, and five visual fields are also observed in the cross section 2. The number of observed visual fields is 10 in total. Then, the maximum particle diameter of the particles is calculated in each of the 10 visual fields. When an elliptic particle is observed, the arithmetic mean value of the major axis diameter and the minor axis diameter of the particle is regarded as the diameter of the particle.

Then, among 10 maximum particle diameters calculated in each of the 10 visual fields, the largest numerical value is adopted and regarded as the maximum particle diameter. When the maximum particle diameter is shorter than 400 nm, TEM data is adopted.

In addition, the particles are subjected to point analysis by EDS provided in the transmission electron microscope. A particle in which both Ti and C are detected is regarded as the compound particle including titanium and carbon. In addition, the crystal structure of the carbide the particle has may be confirmed by an electron beam diffraction pattern or a fast Fourier transform pattern of the transmission electron microscope.

The proportion of the integrated intensity of the X-ray diffraction peak of the compound particle including titanium and carbon to the integrated intensity of the X-ray diffraction peak of the $\alpha$ phase is calculated as follows.

First, the integrated intensity of the diffraction peaks of $Ti_2C$, TiC, and $\alpha$ phase are measured by X-ray diffraction. From the measured integrated intensity of the X-ray diffraction peak, five diffraction planes corresponding to each of the crystal structures are selected. Specifically, for TiC, five diffraction planes of (1 1 1), (2 0 0), (2 2 0), (3 1 1), and (2 2 2) were selected; for $Ti_2C$, five diffraction planes of (1 1 1), (2 2 2), (4 0 0), (4 4 0), and (6 2 0) were selected; and for the $\alpha$ phase, five diffraction planes of (0 0 2), (1 0 1), (1 0 2), (1 1 0), and (1 0 3) were selected. The numerical values in parentheses are the Miller index (h k l) of a crystal. These integrated intensities of the X-ray diffraction peak are added and divided by the following formulae to calculate the B value, which is an index of the proportion of the integrated intensity of the X-ray diffraction peak of the compound particle including titanium and carbon to the integrated intensity of the X-ray diffraction peak of the $\alpha$ phase. When the diffraction peak corresponding to the Miller index is not confirmed, each term of the formula 6 is substituted with zero to calculate the B value.

[Mathematical Formula 6]

$$B = (1.3 I_{TiC} + I_{Ti2C})/I_{\alpha}$$

$$I_{TiC} = \left\{ \sum \left( I_{TiC(hkl)}/R_{TiC(hkl)} \right) \right\}/n$$

$$I_{Ti2C} = \left\{ \sum \left( I_{Ti2C(hkl)}/R_{Ti2C(hkl)} \right) \right\}/n$$

$$I_{\alpha} = \left\{ \sum \left( I_{\alpha(hkl)}/R_{\alpha(hkl)} \right) \right\}/n$$

Herein, $I_{TiC}$ is a representative value of an integrated intensity of TiC, which is a kind of the compound particle including titanium and carbon, $I_{Ti2C}$ is a representative value of an integrated intensity of $Ti_2C$, which is a kind of the compound particle including titanium and carbon, and $I_{\alpha}$ is a representative value of an integrated intensity of the $\alpha$ phase; $I_{TiC(1,1,1)}$ is a measured integrated intensity for each Miller index of the TiC, $I_{Ti2C(hkl)}$ is a measured integrated intensity for each Miller index of the $Ti_2C$, and $I_{\alpha}$ is a measured integrated intensity of the $\alpha$ phase; $R_{TiC(hkl)}$ is a coefficient corresponding to each Miller index of the TiC, $R_{Ti2C(hkl)}$ is a coefficient corresponding to each Miller index of the $Ti_2C$, and $R_{\alpha(hkl)}$ is a coefficient corresponding to each Miller index of the $\alpha$ phase; n is 5; and $R_{TiC(hkl)}$, $R_{Ti2C(hkl)}$, and $R_{\alpha(hkl)}$ correspond to each Miller index as follows.

[Table 6]

| Miller index | $R_{TiC(hkl)}$ | $R_{Ti2C(hkl)}$ | $R_{\alpha(hkl)}$ |
|---|---|---|---|
| (111) | 0.94 | | |
| (200) | 1.00 | | |
| (220) | 0.46 | | |
| (311) | 0.22 | | |
| (222) | 0.14 | | |
| (111) | | 0.12 | |
| (222) | | 1.00 | |

(continued)

| Miller index | $R_{TiC(hkl)}$ | $R_{Ti2C(hkl)}$ | $R_{\alpha(hkl)}$ |
|---|---|---|---|
| (400) | | 0.70 | |
| (440) | | 0.33 | |
| (620) | | 0.22 | |
| (002) | | | 0.36 |
| (101) | | | 0.99 |
| (102) | | | 0.22 |
| (110) | | | 0.22 |
| (103) | | | 0.21 |

The workability of the test piece was in accordance with the pressing bend method described in JIS Z 2248 : 2014 "Metallic materials-Bend test". The test was performed with a bending angle of 105°. The appearance of the test piece after the bend test was observed with the naked eye, and a test piece having no tear and no other defect was rated as pass (GOOD) for workability. A test piece on which tear and other defect were observed was rated as fail (POOR) for workability.

Ductility and balance in strength and ductility were evaluated by a tensile test in accordance with JIS Z 2241 : 2011 "Metallic materials-Tensile testing-Method of test at room temperature". Through the tensile test, tensile strength (TS) and fracture elongation (EL%) were measured. Fracture elongation was measured by a method in which the fractured test pieces were faced with each other. The fracture elongation was used as an index of ductility. The product of tensile strength and fracture elongation was used as an index of balance in strength and ductility. In the tensile test performed in the example, the shape of the test piece was JIS 13B, and the strain rate after the proof stress measurement was controlled to $(0.002 \pm 0.0004)$ s$^{-1}$ by crosshead displacement.

A titanium material in which the product of tensile strength (TS) and fracture elongation (EL%) was 15000 MPa·% or more was evaluated as a titanium material having excellent balance in strength and ductility. The product of tensile strength (TS) and fracture elongation (EL%) is more preferably 16000 MPa·% or more, 17000 MPa·% or more, 18000 MPa·% or more, or 19000 MPa·% or more.

The corrosion resistance of the test piece was evaluated by both a sulfuric acid immersion test and a hydrochloric acid immersion test. Two test pieces were prepared for one example, one was immersed in a 2 mass% aqueous hydrochloric acid solution and the other was immersed in a 4 mass% aqueous sulfuric acid solution. In each test, the aqueous solution temperature was 80°C, and the immersion time was 240 h. The weight of the test piece was measured immediately before the immersion test and immediately after the end of the immersion test. Then, the corrosion rate was calculated based on the following mathematical formulae.

$$(\text{corrosion loss (g)}) = (\text{weight before test (g)}) - (\text{weight after test (g)})$$

(corrosion rate (mm/year)) = 36.5 $\times$ 10 $\times$ (corrosion loss (g)) $\div$ 4.506 $\div$ (test piece surface area (cm$^2$))

Note that the "36.5" in the above formula is a coefficient to convert the time unit from day to year, and is a value obtained by the following formula.

$$365 \text{ (day)} \times 24 \text{ (hour/day)} \div \text{test time (hour)}$$

The "10" in the above formula is a coefficient to convert the length unit from cm to mm.

The "4.506" in the above formula is a coefficient relating to weight and volume.

A test piece having a corrosion rate of 0.10 mm/year or slower in both the sulfuric acid immersion test and the hydrochloric acid immersion test was determined to exhibit sufficient corrosion resistance.

Local corrosion resistance was evaluated by two methods.

In the first local corrosion resistance evaluation, the surface of the test piece after the corrosion resistance evaluation test was observed with an electron microscope at a magnification of 50 to 5000 times to check whether pitting corrosion was present. A test piece in which pitting corrosion having a diameter of 20 $\mu$m or longer was confirmed was rated as fail for corrosion resistance.

The second local corrosion resistance evaluation was performed in accordance with the crevice corrosion testing described in ASTM G78-15. In the crevice corrosion testing, a crevice-forming jig was attached to the test piece to form two or more crevices between the test piece and the jig. After an immersion test, the crevice-forming jig was removed, and whether corrosion at the crevice was present was checked. The test time was 720 h, the test temperature was 80°C, and two kinds of test solution, a 2 mass% aqueous hydrochloric acid solution and a 25% aqueous NaCl solution, were used. The test piece after the test was observed with an optical microscope. An erosion having a depth of 20 $\mu$m or longer was determined as crevice corrosion. A test piece in which crevice corrosion occurred was rated as fail for local corrosion resistance. For a test piece in which crevice corrosion occurred, the probability of crevice corrosion occurrence was measured from the ratio between the total number of places where a crevice was formed and the number of places where crevice corrosion occurred.

Stress corrosion cracking resistance was evaluated in accordance with Method A "42% magnesium chloride stress corrosion cracking test" described in JIS G 0576 : 2001 "Stress corrosion cracking test for stainless steels". This evaluation method is intended for stainless steel, but can also be used as a method for evaluating titanium.

A U-shaped bending test according to Method A was performed for a maximum of 240 hours, and the macro cracking occurrence time was measured. The macro cracking occurrence time is the time required from the start of the test until cracking is recognized by a magnifier. The magnification of the magnifier was 5 to 15 times. Two test solutions were used. One was a 42% magnesium chloride aqueous solution used in Method A of JIS G 0576 : 2001. The other was a 2 mass% aqueous hydrochloric acid solution. These tests were performed at a test temperature of 80°C. The macro cracking occurrence time is shown in the table. Regarding a sample in which cracking did not occur after 240 hours, the macro cracking occurrence time was described as "240 or more".

Interface contact resistance was measured by the following procedure.

First, two sheets of 20 mm x 20 mm carbon paper are prepared, and the resistance value of each sheet of carbon paper is measured by the following procedure. The upper and lower sides of one sheet of carbon paper are sandwiched between copper-plated conductors. The contact area between the conductor and the carbon paper is 20 mm $\times$ 20 mm. The carbon paper sandwiched between conductors is applied with a load of 90 kgf, current of 4.00 A (1.00 A/cm$^2$) is applied in this state, and the resistance value between the conductors at this time is measured. The resistance values measured with two sheets of carbon paper are defined as a resistance value 1 (m$\Omega$/cm$^2$) and a resistance value 2 (m$\Omega$/cm$^2$), respectively.

Next, a disk-shaped test piece having a diameter of 15 mm is prepared. The upper and lower sides of the test piece are sandwiched between 20 mm $\times$ 20 mm carbon paper. After sandwiching with the carbon paper, the upper and lower sides thereof are sandwiched with copper plated conductors. The contact area between the conductor and the carbon paper is 20 mm $\times$ 20 mm. The test piece sandwiched between conductors is applied with a load of 90 kgf, current of 1.76 A (1.00 A/cm$^2$) is applied in this state, and the resistance value between the conductors at this time is measured as a resistance value 3 (m$\Omega$/cm$^2$).

The measured resistance values 1, 2, and 3 are substituted into the following formula to calculate interface contact resistance.

Interface contact resistance (m$\Omega$/cm$^2$) = {resistance value 3 - (resistance value 1 + resistance value 2)/2}/2

The hydrogen overvoltage was measured by the following procedure.

In a 0.5 M sulfuric acid aqueous solution at 80°C, a cathode current of -0.5 A/cm$^2$ is applied to the test piece for 5 minutes, and the potential at that time is measured. The test piece has a disk shape with a diameter of 15 mm. The test area is 1cm$^2$. The reference electrode is a saturated silver/silver chloride electrode. The counter electrode is a platinum plate.

The potential is measured when the current flows at the above current density for 5 minutes. The measured potential is substituted in the following formula to calculate hydrogen overvoltage. The hydrogen overvoltage is an absolute value.

$$\text{Hydrogen overvoltage (V)} = |\,[\text{Measured potential (V)}] + 0.199\,|$$

The oxygen overvoltage was measured by the following procedure.

In a 0.5 M sulfuric acid aqueous solution at 80°C, an anode current of + 0.5 A/cm$^2$ is applied to the test piece for 5 minutes, and the potential at that time is measured. The test piece has a disk shape with a diameter of 15 mm. The test area is 1cm$^2$. The reference electrode is a saturated silver/silver chloride electrode. The counter electrode is a platinum plate.

The potential is measured when the current flows at the above current density for 5 minutes. The measured potential is substituted in the following formula to calculate oxygen overvoltage. The oxygen overvoltage is an absolute value.

$$\text{Oxygen overvoltage (V)} = | \text{[Measured potential (V)]} + 0.199 - 1.230 |$$

After the oxygen overvoltage was measured, the interface contact resistance was measured in the same procedure as described above.

Tables 7A, 7B, and 7C show the results of the study of microstructure. Tables 8A, 8B, and 8C show the results of the study of workability, ductility, balance in strength and ductility, corrosion resistance, local corrosion resistance, and stress corrosion cracking resistance. Tables 9A, 9B, and 9C show the results of the study of interface contact resistance, hydrogen overvoltage, and oxygen overvoltage. The evaluation results disclosed in Tables 8A to 9C are due to the effects exhibited by the chemical compositions disclosed in Tables 4A to 4C and the metallographic structure disclosed in Tables 7A to 7C and Tables 8A to 8C.

[Table 7A]

| | No. | Average particle diameter of compound including Ti and C (nm) | B value | Maximum particle diameter of compound including Ti and C/nm | A value | Whether $Ti_3C_2$ is present |
|---|---|---|---|---|---|---|
| Example of present invention | 1 | 20 | 0.04 | 32 | 0.66 | - |
| | 2 | 90 | 0.03 | 130 | 0.43 | - |
| | 3 | 195 | 0.01 | 305 | 0.21 | - |
| | 4 | 45 | 0.04 | 98 | 0.58 | - |
| | 5 | 9 | 0.05 | 19 | 0.79 | - |
| | 6 | 2 | 0.08 | 5 | 0.88 | - |
| | 7 | 58 | 0.02 | 179 | 0.59 | - |
| | 8 | 39 | 0.02 | 55 | 0.81 | - |
| | 9 | 19 | 0.01 | 33 | 0.83 | - |
| | 10 | 55 | 0.04 | 147 | 0.62 | - |
| | 11 | 15 | 0.06 | 42 | 0.85 | - |
| | 12 | 26 | 0.05 | 68 | 0.81 | - |
| | 13 | 125 | 0.01 | 170 | 0.75 | - |
| | 14 | 15 | 0.06 | 61 | 0.85 | - |
| | 15 | 15 | 0.06 | 58 | 0.85 | - |
| | 16 | 17 | 0.06 | 25 | 0.83 | - |
| | 17 | 1 | 0.09 | 3 | 1.00 | - |
| | 18 | 3 | 0.08 | 8 | 0.97 | - |
| | 19 | 16 | 0.07 | 39 | 0.89 | - |
| | 20 | 60 | 0.03 | 102 | 0.62 | - |
| | 21 | 16 | 0.06 | 37 | 0.57 | - |
| | 22 | 16 | 0.07 | 34 | 0.95 | - |
| | 23 | 16 | 0.06 | 19 | 1.00 | - |
| | 24 | 16 | 7.00 | 18 | 0.92 | - |
| | 25 | 16 | 0.06 | 18 | 0.95 | - |
| | 26 | 16 | 0.06 | 21 | 0.95 | - |
| | 27 | 16 | 0.07 | 20 | 0.92 | - |
| | 28 | 16 | 0.07 | 19 | 0.92 | - |
| | 29 | 15 | 0.07 | 20 | 0.92 | - |
| | 30 | 16 | 0.06 | 22 | 0.92 | - |
| | 31 | 16 | 0.06 | 22 | 0.91 | - |

[Table 7B]

| | No. | Average particle diameter of compound including Ti and C (nm) | B value | Maximum particle diameter of compound including Ti and C/nm | A value | Whether Ti$_3$C$_2$ is present |
|---|---|---|---|---|---|---|
| | 32 | 11 | 0.08 | 17 | 0.95 | EXISTING |
| | 33 | 55 | 0.05 | 180 | 0.51 | - |
| | 34 | 14 | 0.06 | 19 | 0.93 | EXISTING |
| | 35 | 22 | 0.06 | 75 | 0.77 | EXISTING |
| | 36 | 46 | 0.04 | 110 | 0.56 | EXISTING |
| | 37 | 31 | 0.05 | 88 | 0.63 | EXISTING |
| | 38 | 39 | 0.04 | 96 | 0.57 | - |
| | 39 | 3 | 0.08 | 40 | 0.55 | - |
| | 40 | 4 | 0.08 | 68 | 0.48 | - |
| | 41 | 19 | 0.05 | 33 | 0.85 | - |
| | 42 | 6 | 0.08 | 57 | 0.62 | - |
| | 43 | 17 | 0.06 | 33 | 0.85 | - |
| | 44 | 5 | 0.08 | 22 | 0.61 | - |
| | 45 | 5 | 0.08 | 28 | 0.58 | - |
| | 46 | 8 | 0.08 | 45 | 0.75 | - |
| Example of present invention | 47 | 9 | 0.08 | 40 | 0.79 | - |
| | 48 | 8 | 0.08 | 41 | 0.81 | - |
| | 49 | 8 | 0.07 | 40 | 0.81 | - |
| | 50 | 8 | 0.07 | 42 | 0.81 | - |
| | 51 | 8 | 0.07 | 38 | 0.81 | - |
| | 52 | 8 | 0.08 | 40 | 0.81 | - |
| | 53 | 8 | 0.07 | 41 | 0.81 | - |
| | 54 | 8 | 0.08 | 39 | 0.81 | - |
| | 55 | 8 | 0.07 | 40 | 0.81 | - |
| | 56 | 196 | 0.01 | 510 | 0.19 | - |
| | 57 | 195 | 0.01 | 490 | 0.19 | - |
| | 58 | 396 | 0.01 | 4870 | 0.19 | - |
| | 59 | 199 | 0.01 | 1950 | 0.20 | - |
| | 60 | 338 | 0.01 | 2700 | 0.20 | - |
| | 61 | 294 | 0.01 | 2310 | 0.20 | - |
| | 62 | 193 | 0.01 | 1720 | 0.19 | - |
| | 63 | 193 | 0.01 | 1720 | 0.19 | - |
| | 64 | 98 | 0.02 | 940 | 0.28 | EXISTING |

[Table 7C]

| | No. | Average particle diameter of compound including Ti and C (nm) | B value | Maximum particle diameter of compound including Ti and C/nm | A value | Whether Ti$_3$C$_2$ is present |
|---|---|---|---|---|---|---|
| Comparative Example | 65 | <u>450</u> | 0.05 | 1250 | 0.10 | - |
| | 66 | <u>20000</u> | 0.02 | 25100 | 0.00 | - |
| | 67 | <u>480</u> | 0.04 | 550 | 0.12 | - |
| | 68 | <u>490</u> | 0.04 | 690 | 0.11 | - |
| | 69 | <u>460</u> | 0.01 | 440 | 0.10 | - |
| | 70 | <u>430</u> | 0.01 | 1400 | 0.09 | - |
| | 71 | <u>410</u> | 0.03 | 1050 | 0.10 | - |
| | 72 | <u>2400</u> | 0.02 | 5100 | 0.06 | - |
| | 73 | <u>3000</u> | 0.02 | 5500 | 0.04 | - |
| | 74 | <u>700</u> | 0.04 | 38 | 0.00 | - |
| | 75 | <u>550</u> | 0.07 | 330 | 0.09 | - |
| | 76 | 0 | 0.00 | None | 0.00 | - |
| | 77 | <u>590</u> | 0.02 | 2050 | 0.09 | - |
| | 78 | <u>850</u> | 0.05 | 1980 | 0.09 | - |
| | 79 | <u>530</u> | 0.02 | 940 | 0.10 | - |
| | 80 | <u>510</u> | 0.02 | 1050 | 0.10 | - |
| | 81 | <u>600</u> | 0.05 | 1520 | 0.11 | - |
| | 82 | <u>4200</u> | 0.02 | 9100 | 0.05 | - |
| | 83 | <u>900</u> | 0.03 | 3100 | 0.04 | - |
| | 84 | <u>11000</u> | 0.01 | 19000 | 0.00 | - |
| | 85 | <u>23000</u> | 0.02 | 31000 | 0.00 | - |
| | 86 | <u>470</u> | 0.04 | 350 | 0.10 | - |
| | 87 | <u>450</u> | 0.04 | 450 | 0.09 | - |
| | 88 | <u>410</u> | 0.02 | 210 | 0.10 | - |
| | 89 | <u>530</u> | 0.02 | 450 | 0.11 | - |
| | 90 | <u>580</u> | 0.02 | 490 | 0.09 | - |

[Table 8A]

| | No. | Workability | Ductility (Fracture elongation %) | Balance in strength and ductility(MP a. %) | Aqueous hydrochloric acid solution corrosion resistance (mm/year) | Sulfuric acid aqueous solution corrosion resistance (mm/year) | Local corrosion resistance (1) | Local corrosion resistance (2) Proportion of crevice corrosion occurrence in 25% NaCl | Local corrosion resistance (2) Proportion of crevice corrosion occurrence in 2% hydrochloric acid | Stress corrosion cracking resistance (1) 40%MgCl$_2$ | Stress corrosion cracking resistance (2) 2% hydrochloric acid | Note (type of confirmed carbide and intermetallic compound) |
|---|---|---|---|---|---|---|---|---|---|---|---|---|
| Example of present invention | 1 | GOOD | 45.2 | 22522 | 0.05 | 0.02 | GOOD | 0 | 0 | 240 or more | 240 or more | TiC, Ti$_2$C |
| | 2 | GOOD | 42.1 | 21624 | 0.07 | 0.06 | GOOD | 0 | 0 | 240 or more | 240 or more | TiC, Ti$_2$C |
| | 3 | GOOD | 35.1 | 23088 | 0.08 | 0.07 | GOOD | 0 | 0 | 240 or more | 240 or more | TiC, Ti$_2$C |
| | 4 | GOOD | 44.3 | 26210 | 0.06 | 0.03 | GOOD | 0 | 0 | 240 or more | 240 or more | TiC, Ti$_2$C |
| | 5 | GOOD | 46.8 | 38354 | 0.03 | 0.01 | GOOD | 0 | 0 | 240 or more | 240 or more | TiC, Ti$_2$C |
| | 6 | GOOD | 46.5 | 42293 | 0.03 | 0.01 | GOOD | 0 | 0 | 240 or more | 240 or more | TiC, Ti$_2$C |
| | 7 | GOOD | 44.0 | 24705 | 0.05 | 0.03 | GOOD | 0 | 0 | 240 or more | 240 or more | TiC, Ti$_2$C |
| | 8 | GOOD | 44.2 | 21001 | 0.02 | 0.01 | GOOD | 0 | 0 | 240 or more | 240 or more | TiC, Ti$_2$C |
| | 9 | GOOD | 47.3 | 32819 | 0.02 | 0.01 | GOOD | 0 | 0 | 240 or more | 240 or more | TiC, Ti$_2$C |
| | 10 | GOOD | 43.2 | 20454 | 0.04 | 0.03 | GOOD | 0 | 0 | 240 or more | 240 or more | TiC, Ti$_2$C |
| | 11 | GOOD | 45.1 | 33836 | 0.02 | 0.01 | GOOD | 0 | 0 | 240 or more | 240 or more | TiC, Ti$_2$C |
| | 12 | GOOD | 44.1 | 33912 | 0.02 | 0.01 | GOOD | 0 | 0 | 240 or more | 240 or more | TiC, Ti$_2$C |
| | 13 | GOOD | 44.7 | 21494 | 0.03 | 0.02 | GOOD | 0 | 0 | 240 or more | 240 or more | TiC, Ti$_2$C |
| | 14 | GOOD | 46.5 | 25584 | 0.02 | 0.01 | GOOD | 0 | 0 | 240 or more | 240 or more | TiC, Ti$_2$C |
| | 15 | GOOD | 46.2 | 34662 | 0.02 | 0.01 | GOOD | 0 | 0 | 240 or more | 240 or more | TiC, Ti$_2$C |
| | 16 | GOOD | 47.6 | 26911 | 0.02 | 0.01 | GOOD | 0 | 0 | 240 or more | 240 or more | TiC, Ti$_2$C |
| | 17 | GOOD | 47.6 | 27117 | 0.01 | 0.01 | GOOD | 0 | 0 | 240 or more | 240 or more | Ti$_2$C |
| | 18 | GOOD | 49.4 | 50973 | 0.01 | 0.01 | GOOD | 0 | 0 | 240 or more | 240 or more | TiC, Ti$_2$C |
| | 19 | GOOD | 45.5 | 28266 | 0.01 | 0.01 | GOOD | 0 | 0 | 240 or more | 240 or more | TiC, Ti$_2$C |
| | 20 | GOOD | 45.9 | 27868 | 0.04 | 0.02 | GOOD | 0 | 0 | 240 or more | 240 or more | TiC, Ti$_2$C |
| | 21 | GOOD | 48.7 | 38765 | 0.05 | 0.03 | GOOD | 0 | 0 | 240 or more | 240 or more | TiC, Ti$_2$C |
| | 22 | GOOD | 45.1 | 33112 | 0.01 | 0.01 | GOOD | 0 | 0 | 240 or more | 240 or more | TiC, Ti$_2$C |
| | 23 | GOOD | 46.2 | 26651 | 0.01 | 0.01 | GOOD | 0 | 0 | 240 or more | 240 or more | Ti$_2$C |
| | 24 | GOOD | 45.6 | 30689 | 0.01 | 0.01 | GOOD | 0 | 0 | 240 or more | 240 or more | TiC, Ti$_2$C |

(continued)

| No. | Workability | Ductility (Fracture elongation %) | Balance in strength and ductility(MP a. %) | Aqueous hydrochloric acid solution corrosion resistance (mm/year) | Sulfuric acid aqueous solution corrosion resistance (mm/year) | Local corrosion resistance (1) | Local corrosion resistance (2) Proportion of crevice corrosion occurrence in 25% NaCl | Local corrosion resistance (2) Proportion of crevice corrosion occurrence in 2% hydrochloric acid | Stress corrosion cracking resistance (1) 40%MgCl$_2$ | Stress corrosion cracking resistance (2) 2% hydrochloric acid | Note (type of confirmed carbide and intermetallic compound) |
|---|---|---|---|---|---|---|---|---|---|---|---|
| 25 | GOOD | 45.1 | 33112 | 0.01 | 0.01 | GOOD | 0 | 0 | 240 or more | 240 or more | TiC, Ti$_2$C |
| 26 | GOOD | 44.3 | 35535 | 0.01 | 0.01 | GOOD | 0 | 0 | 240 or more | 240 or more | TiC, Ti$_2$C |
| 27 | GOOD | 44.1 | 39573 | 0.01 | 0.01 | GOOD | 0 | 0 | 240 or more | 240 or more | TiC, Ti$_2$C |
| 28 | GOOD | 47.7 | 37957 | 0.01 | 0.01 | GOOD | 0 | 0 | 240 or more | 240 or more | TiC, Ti$_2$C |
| 29 | GOOD | 45.5 | 28885 | 0.01 | 0.01 | GOOD | 0 | 0 | 240 or more | 240 or more | TiC, Ti$_2$C |
| 30 | GOOD | 44.2 | 27459 | 0.01 | 0.01 | GOOD | 0 | 0 | 240 or more | 240 or more | TiC, Ti$_2$C |
| 31 | GOOD | I 45.0 | 36342 | 0.01 | 0.02 | GOOD | 0 | 0 | 240 or more | 240 or more | TiC, Ti$_2$C |

[Table 8B]

| | No. | Workability | Ductility (Fracture elongation %) | Balance in strength and ductility (MPa·%) | Aqueous hydrochloric acid solution corrosion resistance (mm/year) | Sulfuric acid aqueous solution corrosion resistance (mm/year) | Local corrosion resistance (1) | Local corrosion resistance (2) Proportion of crevice corrosion occurrence in 25% NaCl | Local corrosion resistance (2) Proportion of crevice corrosion occurrence in 2% hydrochloric acid | Stress corrosion cracking resistance (1) 40% MgCl$_2$ | Stress corrosion cracking resistance (2) 2% hydrochloric acid | Note (type of confirmed carbide and intermetallic compound) |
|---|---|---|---|---|---|---|---|---|---|---|---|---|
| | 32 | GOOD | 44.8 | 29365 | 0.01 | 0.01 | GOOD | 0 | 0 | 240 or more | 240 or more | TiC, Ti$_2$C |
| | 33 | GOOD | 47.2 | 26704 | 0.05 | 0.03 | GOOD | 0 | 0 | 240 or more | 240 or more | TiC, Ti$_2$C |
| | 34 | GOOD | 44.8 | 27033 | 0.01 | 0.01 | GOOD | 0 | 0 | 240 or more | 240 or more | TiC, Ti$_2$C |
| | 35 | GOOD | 46.5 | 33507 | 0.02 | 0.01 | GOOD | 0 | 0 | 240 or more | 240 or more | TiC, Ti$_2$C |
| | 36 | GOOD | 45.1 | 26662 | 0.05 | 0.03 | GOOD | 0 | 0 | 240 or more | 240 or more | TiC, Ti$_2$C |
| | 37 | GOOD | 45.6 | 24985 | 0.04 | 0.02 | GOOD | 0 | 0 | 240 or more | 240 or more | TiC, Ti$_2$C |
| | 38 | GOOD | 45.8 | 30884 | 0.05 | 0.03 | GOOD | 0 | 0 | 240 or more | 240 or more | TiC, Ti$_2$C |
| | 39 | GOOD | 48.2 | 53656 | 0.05 | 0.02 | GOOD | 0 | 0 | 240 or more | 240 or more | TiC. Ti$_2$C |
| | 40 | GOOD | 46.1 | 58186 | 0.06 | 0.03 | GOOD | 0 | 0 | 240 or more | 240 or more | TiC, Ti$_2$C |
| | 41 | GOOD | 45.3 | 22897 | 0.01 | 0.01 | GOOD | 0 | 0 | 240 or more | 240 or more | TiC, Ti$_2$C |
| | 42 | GOOD | 46.2 | 37154 | 0.04 | 0.02 | GOOD | 0 | 0 | 240 or more | 240 or more | TiC, Ti$_2$C |
| | 43 | GOOD | 46.8 | 28494 | 0.01 | 0.01 | GOOD | 0 | 0 | 240 or more | 240 or more | TiC, Ti$_2$C |
| Example of present invention | 44 | GOOD | 46.2 | 50001 | 0.04 | 0.02 | GOOD | 0 | 0 | 240 or more | 240 or more | TiC, Ti$_2$C, AlC |
| | 45 | GOOD | 49.2 | 58335 | 0.05 | 0.03 | GOOD | 0 | 0 | 240 or more | 240 or more | TiC, Ti$_2$C, VC |
| | 46 | GOOD | 47.7 | 48120 | 0.02 | 0.01 | GOOD | 0 | 0 | 240 or more | 240 or more | TiC, Ti$_2$C |
| | 47 | GOOD | 47.2 | 46221 | 0.02 | 0.02 | GOOD | 0 | 0 | 240 or more | 240 or more | TiC, Ti$_2$C |
| | 48 | GOOD | 46.8 | 39929 | 0.02 | 0.01 | GOOD | 0 | 0 | 240 or more | 240 or more | TiC, Ti$_2$C |
| | 49 | GOOD | 45.1 | 41977 | 0.02 | 0.02 | GOOD | 0 | 0 | 240 or more | 240 or more | TiC, Ti$_2$C |
| | 50 | GOOD | 45.0 | 46072 | 0.02 | 0.02 | GOOD | 0 | 0 | 240 or more | 240 or more | TiC, Ti$_2$C |
| | 51 | GOOD | 47.3 | 44025 | 0.02 | 0.02 | GOOD | 0 | 0 | 240 or more | 240 or more | TiC, Ti$_2$C |

| | No. | Workability | Ductility (Fracture elongation %) | Balance in strength and ductility (MPa·%) | Aqueous hydrochloric acid solution corrosion resistance (mm/year) | Sulfuric acid aqueous solution corrosion resistance (mm/year) | Local corrosion resistance (1) | Local corrosion resistance (2) Proportion of crevice corrosion occurrence in 25% NaCl | Local corrosion resistance (2) Proportion of crevice corrosion occurrence in 2% hydrochloric acid | Stress corrosion cracking resistance (1) 40% MgCl$_2$ | Stress corrosion cracking resistance (2) 2% hydrochloric acid | Note (type of confirmed carbide and intermetallic compound) |
|---|---|---|---|---|---|---|---|---|---|---|---|---|
| | 52 | GOOD | 44.0 | 45049 | 0.02 | 0.01 | GOOD | 0 | 0 | 240 or more | 240 or more | TiC, Ti$_2$C |
| | 53 | GOOD | 45.5 | 35834 | 0.02 | 0.02 | GOOD | 0 | 0 | 240 or more | 240 or more | TiC. Ti$_2$C |
| | 54 | GOOD | 44.2 | 34810 | 0.02 | 0.01 | GOOD | 0 | 0 | 240 or more | 240 or more | TiC. Ti$_2$C |
| | 55 | GOOD | 42.9 | 33786 | 0.02 | 0.02 | GOOD | 0 | 0 | 240 or more | 240 or more | TiC, Ti$_2$C |
| 56 | GOOD | 35.4 | 17528 | 0.10 | 0.07 | GOOD | 0 | 0 | 240 or more | 240 or more | TiC, Ti$_2$C |
| 57 | GOOD | 35.2 | 18025 | 0.10 | 0.08 | GOOD | 0 | 0 | 240 or more | 240 or more | TiC, Ti$_2$C |
| 58 | GOOD | 30.4 | 15182 | 0.10 | 0.07 | GOOD | 0 | 0 | 240 or more | 240 or more | TiC, Ti$_2$C |
| 59 | GOOD | 33.6 | 20422 | 0.09 | 0.06 | GOOD | 0 | 0 | 240 or more | 240 or more | TiC, Ti$_2$C |
| 60 | GOOD | 30.3 | 16085 | 0.09 | 0.06 | GOOD | 0 | 0 | 240 or more | 240 or more | TiC, Ti$_2$C |
| 61 | GOOD | 34.5 | 21278 | 0.09 | 0.05 | GOOD | 0 | 0 | 240 or more | 240 or more | TiC, Ti$_2$C |
| 62 | GOOD | 33.3 | 21559 | 0.10 | 0.08 | GOOD | 0 | 0 | 240 or more | 240 or more | TiC, Ti$_2$C |
| 63 | GOOD | 33.2 | 21559 | 0.10 | 0.07 | GOOD | 0 | 0 | 240 or more | 240 or more | TiC, Ti$_2$C |
| 64 | GOOD | 34.2 | 19480 | 0.04 | 0.02 | GOOD | 0 | 0 | 240 or more | 240 or more | TiC, Ti$_2$C |

EP 4 617 390 A1

45

[Table 8C]

| | No. | Workability | Ductility (Fracture elongation%) | Balance in strength and ductility (MPa·%) | Aqueous hydrochloric acid solution corrosion resistance (mm/year) | Sulfuric acid aqueous solution corrosion resistance (mm/year) | Local corrosion resistance (1) | Local corrosion resistance (2) Proportion of crevice corrosion occurrence in 25% NaCl | Local corrosion resistance (2) Proportion of crevice corrosion occurrence in 2 % hydrochloric acid | Stress corrosion cracking resistance (1) 40%MgCl$_2$ | Stress corrosion cracking resistance (2) 2% hydrochloric acid | Note (type of precipitated carbide and intermetallic compound) |
|---|---|---|---|---|---|---|---|---|---|---|---|---|
| Comparative Example | 65 | GOOD | 28.7 | 10310 | 0.22 | 0.19 | GOOD | 20 | 50 | 240 | 168 | TiC, Ti$_2$C |
| | 66 | POOR | 9.2 | 3953 | 0.95 | 0.77 | POOR | 50 | 100 | 48 | 48 | TiC |
| | 67 | POOR | 28.0 | 14810 | 0.11 | 0.11 | GOOD | 0 | 0 | 240 | 240 | TiC, Ti$_2$C |
| | 68 | POOR | 25.4 | 14305 | 0.10 | 0.10 | GOOD | 0 | 0 | 0 | 0 | TiC, Ti$_2$C |
| | 69 | POOR | 29.2 | 14121 | 0.12 | 0.10 | GOOD | 0 | 0 | 0 | 0 | TiC, Ti$_2$C |
| | 70 | GOOD | 21.0 | 14022 | 0.22 | 0.18 | GOOD | 20 | 40 | 240 | 192 | TiC, Ti$_2$C |
| | 71 | GOOD | 20.5 | 13744 | 0.11 | 0.11 | GOOD | 0 | 10 | 240 | 216 | TiC, Ti$_2$C |
| | 72 | POOR | 22.8 | 8961 | 0.21 | 0.19 | POOR | 20 | 50 | 240 | 144 | TiC, Ti$_2$C |
| | 73 | POOR | 23.3 | 9339 | 0.25 | 0.22 | POOR | 20 | 50 | 240 | 144 | TiC, Ti$_2$C |
| | 74 | GOOD | 22.7 | 14828 | 0.51 | 0.47 | GOOD | 40 | 80 | 72 | 48 | TiC |
| | 75 | POOR | 23.5 | 12743 | 0.10 | 0.10 | GOOD | 0 | 0 | 240 | 240 | TiC, Ti$_2$C |
| | 76 | GOOD | 41.2 | 11954 | 8.11 | 7.46 | POOR | 100 | 100 | 24 | 24 | None |

(continued)

| No. | Workability | Ductility (Fracture elongation%) | Balance in strength and ductility (MPa·%) | Aqueous hydrochloric acid solution corrosion resistance (mm/year) | Sulfuric acid aqueous solution corrosion resistance (mm/year) | Local corrosion resistance (1) | Local corrosion resistance (2) Proportion of crevice corrosion occurrence in 25% NaCl | Local corrosion resistance (2) Proportion of crevice corrosion occurrence in 2 % hydrochloric acid | Stress corrosion cracking resistance (1) 40%MgCl$_2$ | Stress corrosion cracking resistance (2) 2% hydrochloric acid | Note (type of precipitated carbide and intermetallic compound) |
|---|---|---|---|---|---|---|---|---|---|---|---|
| 77 | POOR | 24.6 | 14266 | 0.19 | 0.17 | GOOD | 10 | 100 | 240 | 216 | TiC, Ti$_2$C |
| 78 | POOR | 25.1 | 10449 | 0.26 | 0.23 | POOR | 20 | 100 | 240 | 144 | TiC, Ti$_2$C |
| 79 | GOOD | 26.6 | 13720 | 0.19 | 0.15 | GOOD | 20 | 50 | 48 | 24 | TiC, Ti$_2$C |
| 80 | GOOD | 27.3 | 13897 | 0.22 | 0.18 | GOOD | 20 | 50 | 48 | 24 | TiC, Ti$_2$C |
| 81 | POOR | 28.8 | 12972 | 0.12 | 0.11 | GOOD | 20 | 50 | 48 | 24 | TiC, Ti$_2$C |
| 82 | POOR | 25.2 | 11325 | 0.22 | 0.19 | POOR | 40 | 80 | 24 | 24 | TiC, Ti$_2$C |
| 83 | POOR | 17.3 | 8759 | 0.24 | 0.21 | POOR | 100 | 100 | 24 | 24 | TiC, Ti$_2$C, Ti$_2$Cu |
| 84 | POOR | 26.1 | 14005 | 0.82 | 0.73 | POOR | 50 | 100 | 48 | 48 | TiC |
| 85 | POOR | 22.4 | 14500 | 0.72 | 0.67 | POOR | 50 | 100 | 48 | 48 | TiC |
| 86 | POOR | 20.5 | 13690 | 0.11 | 0.11 | GOOD | 0 | 0 | 0 | 0 | TiC, Ti$_2$C |
| 87 | POOR | 15.2 | 11760 | 0.11 | 0.11 | GOOD | 0 | 0 | 0 | 0 | TiC, Ti$_2$C |
| 88 | POOR | 11.8 | 9740 | 0.11 | 0.11 | GOOD | 0 | 0 | 0 | 0 | TiC, Ti$_2$C |
| 89 | GOOD | 25.9 | 13780 | 0.10 | 0.10 | GOOD | 0 | 10 | 0 | 0 | TiC, Ti$_2$C |
| 90 | GOOD | 28.2 | 14762 | 0.10 | 0.10 | GOOD | 0 | 10 | 0 | 0 | TiC, Ti$_2$C |

[Table 9A]

| | No. | Interface contact resistance (mΩ/cm$^2$) | Hydrogen overvoltage (V) | Oxygen overvoltage (V) | Interface contact resistance after oxygen overvoltage measurement (mΩ/cm$^2$) |
|---|---|---|---|---|---|
| Example of present invention | 1 | Excellent | Excellent | Excellent | Excellent |
| | 2 | Excellent | Excellent | Excellent | Excellent |
| | 3 | Excellent | Excellent | Excellent | Good |
| | 4 | Excellent | Excellent | Excellent | Excellent |
| | 5 | Good | Excellent | Excellent | Good |
| | 6 | Fair | Good | Good | Fair |
| | 7 | Good | Good | Good | Good |
| | 8 | Excellent | Good | Excellent | Good |
| | 9 | Good | Good | Good | Fair |
| | 10 | Excellent | Excellent | Good | Good |
| | 11 | Excellent | Excellent | Good | Excellent |
| | 12 | Excellent | Good | Good | Good |
| | 13 | Excellent | Excellent | Excellent | Excellent |
| | 14 | Excellent | Excellent | Good | Good |
| | 15 | Good | Good | Good | Good |
| | 16 | Good | Good | Fair | Fair |
| | 17 | Excellent | Excellent | Good | Good |
| | 18 | Excellent | Excellent | Excellent | Good |
| | 19 | Excellent | Excellent | Excellent | Excellent |
| | 20 | Excellent | Excellent | Excellent | Excellent |
| | 21 | Excellent | Excellent | Good | Good |
| | 22 | Excellent | Excellent | Excellent | Excellent |
| | 23 | Excellent | Excellent | Excellent | Excellent |
| | 24 | Good | Good | Fair | Good |
| | 25 | Excellent | Fair | Good | Good |
| | 26 | Excellent | Excellent | Good | Fair |
| | 27 | Excellent | Excellent | Excellent | Good |
| | 28 | Good | Good | Good | Fair |
| | 29 | Fair | Good | Fair | Fair |
| | 30 | Excellent | Excellent | Fair | Good |
| | 31 | Excellent | Excellent | Good | Good |

[Table 9B]

| | No. | Interface contact resistance (mΩ/cm$^2$) | Hydrogen overvoltage (V) | Oxygen overvoltage (V) | Interface contact resistance after oxygen overvoltage measurement (mΩ/cm$^2$) |
|---|---|---|---|---|---|
| Example of present invention | 32 | Excellent | Excellent | Excellent | Excellent |
| | 33 | Excellent | Excellent | Good | Good |
| | 34 | Excellent | Excellent | Excellent | Excellent |
| | 35 | Excellent | Excellent | Excellent | Excellent |
| | 36 | Excellent | Excellent | Excellent | Excellent |
| | 37 | Excellent | Excellent | Excellent | Excellent |
| | 38 | Excellent | Excellent | Good | Good |
| | 39 | Good | Fair | Fair | Fair |
| | 40 | Fair | Fair | Fair | Fair |
| | 41 | Excellent | Excellent | Excellent | Excellent |
| | 42 | Good | Fair | Fair | Fair |
| | 43 | Good | Good | Good | Good |
| | 44 | Excellent | Excellent | Good | Good |
| | 45 | Excellent | Good | Good | Good |
| | 46 | Excellent | Excellent | Good | Good |
| | 47 | Excellent | Good | Good | Good |
| | 48 | Excellent | Good | Excellent | Excellent |
| | 49 | Excellent | Excellent | Good | Good |
| | 50 | Excellent | Good | Good | Good |
| | 51 | Excellent | Good | Fair | Good |
| | 52 | Excellent | Good | Excellent | Fair |
| | 53 | Excellent | Fair | Good | Good |
| | 54 | Excellent | Good | Good | Good |
| | 55 | Excellent | Excellent | Good | Fair |
| | 56 | Excellent | Good | Good | Good |
| | 57 | Excellent | Excellent | Good | Good |
| | 58 | Excellent | Good | Good | Fair |
| | 59 | Excellent | Excellent | Good | Good |
| | 60 | Excellent | Excellent | Fair | Good |
| | 61 | Excellent | Good | Good | Good |
| | 62 | Excellent | Good | Good | Good |
| | 63 | Excellent | Excellent | Excellent | Excellent |
| | 64 | Excellent | Excellent | Excellent | Excellent |

[Table 9C]

| | No. | Interface contact resistance (mΩ/cm²) | Hydrogen overvoltage (V) | Oxygen overvoltage (V) | Interface contact resistance after oxygen overvoltage measurement (mΩ/cm²) |
|---|---|---|---|---|---|
| Comparative | 65 | Fair | Fair | Poor | Poor |
| Example | 66 | Good | Fair | Poor | Poor |
| | 67 | Good | Fair | Fair | Poor |
| | 68 | Fair | Poor | Poor | Poor |
| | 69 | Good | Good | Fair | Poor |
| | 70 | Fair | Fair | Poor | Poor |
| | 71 | Fair | Fair | Poor | Poor |
| | 72 | Fair | Fair | Fair | Poor |
| | 73 | Good | Fair | Poor | Good |
| | 74 | Fair | Fair | Poor | Poor |
| | 75 | Good | Fair | Poor | Good |
| | 76 | Poor | Poor | Poor | Poor |
| | 77 | Good | Good | Poor | Fair |
| | 78 | Poor | Poor | Good | Poor |
| | 79 | Excellent | Poor | Fair | Excellent |
| | 80 | Excellent | Poor | Fair | Excellent |
| | 81 | Fair | Fair | Fair | Poor |
| | 82 | Poor | Good | Poor | Poor |
| | 83 | Poor | Good | Good | Poor |
| | 84 | Fair | Fair | Poor | Poor |
| | 85 | Fair | Fair | Poor | Poor |
| | 86 | Good | Fair | Fair | Poor |
| | 87 | Poor | Poor | Poor | Poor |
| | 88 | Fair | Fair | Poor | Poor |
| | 89 | Fair | Poor | Fair | Poor |
| | 90 | Fair | Fair | Poor | Fair |

In the invention examples 1 to 64, the chemical composition and the average diameter of the compound particle including titanium and carbon were within a predetermined range. These invention examples had a metallographic structure including the compound particle including titanium and carbon and the α phase.

These invention examples had excellent ductility, workability, balance in strength and ductility, corrosion resistance, local corrosion resistance, and stress corrosion cracking resistance.

On the other hand, in Comparative Examples 65 to 90, in which one or both of the chemical composition and the average diameter of the compound particle including titanium and carbon were out of the predetermined range, one or more of ductility, workability, balance in strength and ductility, corrosion resistance, local corrosion resistance, and stress corrosion cracking resistance were insufficient. Among these comparative examples, Comparative Example 76 had a metallographic structure of the α single phase, and Comparative Example 83 had a metallographic structure containing an intermetallic compound. Other comparative examples had a metallographic structure including the compound particle including titanium and carbon and the α phase.

In Comparative Example 65, the chemical composition was within the predetermined range, but the average diameter of the compound particle was too large. This is presumably because the additional annealing was performed based on the pattern A, and the heat treatment I was not performed, but the average temperature rising rate in the heat treatment II was excessively high.

In Comparative Example 66, the chemical composition was within the predetermined range, but the average diameter of the compound particle was too large. This is presumably because the cold working degree was insufficient before the additional annealing.

In Comparative Example 67, the chemical composition was within the predetermined range, but the average diameter of the compound particle was too large. This is presumably because the cooling temperature control after hot rolling was not performed and the intermediate annealing temperature was insufficient.

In Comparative Example 68, the chemical composition was within the predetermined range, but the average diameter of the compound particle was too large. This is presumably because the intermediate annealing temperature was excessively high.

In Comparative Example 69, the chemical composition was within the predetermined range, but the average diameter of the compound particle was too large. This is presumably because the holding temperature in the heat treatment II was insufficient.

In Comparative Example 70, the chemical composition was within the predetermined range, but the average diameter of the compound particle was too large. This is presumably because the holding time in the heat treatment II was insufficient.

In Comparative Example 71, the chemical composition was within the predetermined range, but the average diameter of the compound particle was too large. This is presumably because the holding time in the heat treatment II was insufficient.

In Comparative Example 72, the chemical composition was within the predetermined range, but the average diameter of the compound particle was too large. This is presumably because the holding temperature in the heat treatment I was too low.

In Comparative Example 73, the chemical composition was within the predetermined range, but the average diameter of the compound particle was too large. This is presumably because the average temperature rising rate and the holding temperature in the heat treatment I were too high.

In Comparative Example 74, the chemical composition was within the predetermined range, but the average diameter of the compound particle was too large. This is presumably because the holding time in the heat treatment I was too short.

In Comparative Example 75, the chemical composition was within the predetermined range, but the average diameter of the compound particle was too large. This is presumably because the holding time in the heat treatment II was insufficient.

In Comparative Example 76, the C content was insufficient. Therefore, in Comparative Example 76, the compound particle including Ti and carbon was not produced.

In Comparative Example 77, the C content was excessively large. Therefore, in Comparative Example 77, the average diameter of the compound particle containing Ti and carbon was excessively large.

In Comparative Example 78, the Fe content was excessively large. Therefore, in Comparative Example 78, the average diameter of the compound particle containing Ti and carbon was excessively large.

In Comparative Example 79, the S content was excessively large. Therefore, in Comparative Example 79, the average diameter of the compound particle containing Ti and carbon was excessively large.

In Comparative Example 80, the P content was excessively large. Therefore, in Comparative Example 80, the average diameter of the compound particle containing Ti and carbon was excessively large.

In Comparative Example 81, the Si content was excessively large. Therefore, in Comparative Example 81, the average diameter of the compound particle containing Ti and carbon was excessively large.

In Comparative Example 82, the O content was excessively large. Therefore, in Comparative Example 82, the average diameter of the compound particle containing Ti and carbon was excessively large.

In Comparative Example 83, the total content of Mn, Cu, Cr, Sn, and Zr was excessively large. Therefore, in Comparative Example 83, an intermetallic compound was formed.

In Comparative Example 84, the chemical composition was within the predetermined range, but the average diameter of the compound particle including Ti and carbon was too large. This is presumably because the cold working degree was insufficient before the additional annealing.

In Comparative Example 85, the chemical composition was within the predetermined range, but the average diameter of the compound particle including Ti and carbon was too large. This is presumably because cold working was not performed in the cold working before the additional annealing.

In Comparative Example 86, the chemical composition was within the predetermined range, but the average diameter of the compound particle including Ti and carbon was too large. This is presumably because the holding temperature in the heat treatment II was insufficient.

In Comparative Example 87, the chemical composition was within the predetermined range, but the average diameter of the compound particle including Ti and carbon was too large. This is presumably because the holding temperature in the heat treatment II was insufficient.

In Comparative Example 88, since the holding time in the heat treatment I is 80 seconds, the additional annealing corresponds to the pattern C2. In Comparative Example 88, the chemical composition was within the predetermined range, but the average diameter of the compound particle including Ti and carbon was too large. In Comparative Example 88, the temperature was raised using a salt bath, but here, the average temperature rising rate in the heat treatment II was excessively high. Therefore, this is presumably because the compound particle including Ti and carbon were too large.

In Comparative Example 89, the chemical composition was within the predetermined range, but the average diameter of the compound particle including Ti and carbon was too large. This is presumably because the holding temperature in the heat treatment I was too low.

In Comparative Example 90, the chemical composition was within the predetermined range, but the average diameter of the compound particle including Ti and carbon was too large. This is presumably because the temperature rising rate and the soaking holding temperature in the heat treatment II were insufficient.

Although the preferred embodiments of the present invention have been described in detail, the present invention is not limited to such examples. It is obvious that a person having ordinary knowledge in the technical field to which the present invention belongs can conceive various changes or modifications within the scope of the technical idea described in the claims, and it is naturally understood that these also belong to the technical scope of the present invention.

**Claims**

1. A titanium material comprising: in terms of mass%,

   0.100 to 0.300% of C;
   0.000 to 0.030% of N;
   0.000 to 0.100% of Si;
   0.000 to 0.300% of Fe;
   0.0300% or less of S;
   0.0300% or less of P;
   0.000 to 0.015% of H;
   0.000 to 0.250% of O;
   0.000 to 0.300% of B;
   0.000 to 0.500% of Al;
   0.000 to 0.200% of Ca;
   0.000 to 0.100% of Sc;
   0.000 to 0.500% of V;
   0.000 to 0.600% of Co;
   0.000 to 0.400% of Ni;
   0.000 to 0.300% of Zn;
   0.000 to 0.200% of Ga;
   0.000 to 0.200% of Ge;
   0.000 to 0.300% of Y;
   0.000 to 0.150% of Nb;
   0.000 to 0.250% of Mo;
   0.000 to 0.100% of Ag;
   0.000 to 0.200% of Cd;
   0.000 to 0.100% of In;
   0.000 to 0.100% of Sb;
   0.000 to 0.180% of Bi;
   0.000 to 0.300% of Hf;
   0.000 to 0.300% of Ta;
   0.000 to 0.600% of W;
   0.000 to 0.300% of Re;
   0.000 to 0.100% of Au;
   0.000 to 0.200% in total of one or more of Pt, Pd, Ru, Ir, Rh, and Os;
   0.00 to 0.20% in total of one or more of Mn, Cu, Cr, Sn, and Zr; and
   a balance including Ti and impurities, wherein
   the titanium material comprises a compound particle including titanium and carbon and having an average diameter of 400 nm or shorter.

2. The titanium material according to claim 1, comprising: in terms of mass%,

   0.0001 to 0.0300% of S; and
   0.0001 to 0.0300% of P.

3. The titanium material according to claim 1, wherein

   an A value is 0.10 or more, the A value being calculated by substituting an X-ray diffraction analysis result of the compound particle including titanium and carbon into the following formulae,

   [Mathematical formula 1]

   $$A = I_{Ti2C}/(1.3 I_{TiC} + I_{Ti2C})$$
   $$I_{TiC} = \left\{ \sum \left( I_{TiC(hkl)}/R_{TiC(hkl)} \right) \right\}/n$$
   $$I_{Ti2C} = \left\{ \sum \left( I_{Ti2C(hkl)}/R_{Ti2C(hkl)} \right) \right\}/n$$

   $I_{TiC}$ is a representative value of an integrated intensity of TiC, which is a kind of the compound particle including titanium and carbon,
   $I_{Ti2C}$ is a representative value of an integrated intensity of $Ti_2C$, which is a kind of the compound particle including titanium and carbon,
   $I_{TiC(hkl)}$ is a measured integrated intensity for each Miller index of the TiC,
   $I_{Ti2C(hkl)}$ is a measured integrated intensity for each Miller index of the $Ti_2C$,
   $R_{TiC(hkl)}$ is a coefficient corresponding to each Miller index of the TiC,
   $R_{Ti2C(hkl)}$ is a coefficient corresponding to each Miller index of the $Ti_2C$, and
   n is 5, and
   $R_{TiC(hkl)}$ and $R_{Ti2C(hkl)}$ correspond to each Miller index as shown in the following table.

   [Table 1]

   | Miller index | $R_{TiC}$ (hkl) | $R_{Ti2C}$ (hkl) |
   |---|---|---|
   | (111) | 0.94 | |
   | (200) | 1.00 | |
   | (220) | 0.46 | |
   | (311) | 0.22 | |
   | (222) | 0.14 | |
   | (111) | | 0.12 |
   | (222) | | 1.00 |
   | (400) | | 0.70 |
   | (440) | | 0.33 |
   | (620) | | 0.22 |

4. The titanium material according to claim 1, comprising $Ti_3C_2$.

5. A chemical device component comprising the titanium material according to any one of claims 1 to 4.

6. A chemical device comprising the chemical device component according to claim 5.

FIG. 1

FIG. 2A

FIG. 2B

# FIG. 3A

# FIG. 3B

# FIG. 4

PATTERN A

· TEMPERATURE RISING RATE, AND
· SOAKING HOLDING TEMPERATURE
  RANGE IN HEAT TREATMENT II
  ARE SPECIFIED

II

TEMPERATURE

PATTERN B

· SOAKING HOLDING TEMPERATURE
  RANGE IN HEAT TREATMENT I
· SOAKING HOLDING TEMPERATURE
  RANGE IN HEAT TREATMENT II
  ARE SPECIFIED

II

I

TEMPERATURE

PATTERN C

· SOAKING HOLDING TEMPERATURE
  RANGE IN HEAT TREATMENT I
· SOAKING HOLDING TEMPERATURE
  RANGE IN HEAT TREATMENT II
  ARE SPECIFIED
*TEMPERATURE RISING RATE IN HEAT
  TREATMENT II IS SPECIFIED IN C2

II

I

TEMPERATURE

TIME

## FIG. 5

## FIG. 6

FIG. 7

**EP 4 617 390 A1**

## INTERNATIONAL SEARCH REPORT

| International application No. |
|---|
| **PCT/JP2022/041712** |

| A. | CLASSIFICATION OF SUBJECT MATTER |
|---|---|

*C22C 14/00*(2006.01)i; *C22F 1/00*(2006.01)n; *C22F 1/18*(2006.01)i
FI:  C22C14/00 Z; C22F1/18 H; C22F1/00 601; C22F1/00 623; C22F1/00 630A; C22F1/00 630K; C22F1/00 640A;
     C22F1/00 641A; C22F1/00 683; C22F1/00 684A; C22F1/00 684Z; C22F1/00 686A; C22F1/00 686B; C22F1/00 691A;
     C22F1/00 691B; C22F1/00 691C; C22F1/00 692A; C22F1/00 692B; C22F1/00 694A

According to International Patent Classification (IPC) or to both national classification and IPC

| B. | FIELDS SEARCHED |
|---|---|

Minimum documentation searched (classification system followed by classification symbols)

C22C14/00; C22F1/00; C22F1/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2019/198147 A1 (NIPPON STEEL CORP.) 17 October 2019 (2019-10-17) claims, paragraphs [0001]-[0040] | 1-2, 5-6 |
| A |  | 3-4 |
| A | JP 2015-63720 A (KABUSHIKI KAISHA KOBE SEIKO SHO) 09 April 2015 (2015-04-09) entire text | 1-6 |
| A | JP 2017-190480 A (KABUSHIKI KAISHA KOBE SEIKO SHO) 19 October 2017 (2017-10-19) entire text | 1-6 |
| A | JP 2021-17611 A (TOHOKU UNIVERSITY) 15 February 2021 (2021-02-15) claims | 1-6 |
| A | JP 2011-195884 A (KABUSHIKI KAISHA KOBE SEIKO SHO) 06 October 2011 (2011-10-06) claims, table 1 | 1-6 |

☑ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 December 2022** | **27 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/041712**

### C. DOCUMENTS CONSIDERED TO BE RELEVANT

| Category* | Citation of document, with indication, where appropriate, of the relevant passages | Relevant to claim No. |
|---|---|---|
| A | JP 2011-153350 A (KABUSHIKI KAISHA KOBE SEIKO SHO) 11 August 2011 (2011-08-11) claims, table 1 | 1–6 |

Form PCT/ISA/210 (second sheet) (January 2015)

**INTERNATIONAL SEARCH REPORT**
Information on patent family members

International application No.

**PCT/JP2022/041712**

| Patent document cited in search report | | | Publication date (day/month/year) | Patent family member(s) | | | Publication date (day/month/year) |
|---|---|---|---|---|---|---|---|
| WO | 2019/198147 | A1 | 17 October 2019 | CN claims, paragraphs [0001]-[0071] KR 10-2020-0118878 | 111902550 | A A | |
| JP | 2015-63720 | A | 09 April 2015 | EP entire text US | 3050984 2016/0208365 | A1 A1 | |
| JP | 2017-190480 | A | 19 October 2017 | (Family: none) | | | |
| JP | 2021-17611 | A | 15 February 2021 | (Family: none) | | | |
| JP | 2011-195884 | A | 06 October 2011 | (Family: none) | | | |
| JP | 2011-153350 | A | 11 August 2011 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007077645 A
- JP 2012012636 A
- JP 2009509038 W

### Non-patent literature cited in the description

- *Tetsu-to-Hagane*, 1994, vol. 80 (4), 353-358
- *Journal of the Japan Institute of Metals and Materials*, 2017, vol. 81 (10), 447-457
- *Tetsu-to-Hagane*, 2018, vol. 104 (5), 264-273
- Metallic materials-Bend test. *JIS Z 2248 : 2014*, 2014
- Metallic materials-Tensile testing-Method of test at room temperature. *JIS Z 2241 : 2011*, 2011
- Stress corrosion cracking test for stainless steels. *JIS G 0576 : 2001*, 2001